# EUROPEAN PATENT SPECIFICATION

(11) **EP 1 585 790 B1**
(45) Date of publication and mention of the grant of the patent: **26.03.2008**
(21) Application number: 03815492.8
(22) Date of filing: 17.12.2003
(51) Int. Cl.: C08L 67/02, C08L 69/00, C08K 5/524, C08K 5/5393, C08K 5/34, C08K 5/00

(54) **POLYMER BLENDS**
POLYMERBLENDS
MELANGES DE POLYMERES

(30) Priority: 05.03.2003 US 382013
(43) Date of publication of application: 19.10.2005
(73) Proprietor: EASTMAN CHEMICAL COMPANY, Kingsport, TN 37660 (US)
(72) Inventor: PEARSON, Jason, Clay, Kingsport, TN 37663 (US); MCWILLIAMS, Douglas, Stephens, Kingsport, TN 37664 (US); IRICK, Gether, Jr., Gray, TN 37615 (US); WEAVER, Max, Allen, Kingsport, TN 37664 (US)
(74) Representative: Wibbelmann, Jobst
(86) International application number: PCT/US2003/040533
(87) International publication number: WO 2004/065487

(56) References cited:
- EP-A- 1 304 351
- US-A- 4 956 407
- US-A- 5 254 610
- US-A- 5 744 554
- US-A- 6 103 796
- PATENT ABSTRACTS OF JAPAN vol. 1998, no. 05, 30 April 1998 (1998-04-30) & JP 10 001602 A (SUMITOMO DOW LTD), 6 January 1998 (1998-01-06)

## Description

### FIELD OF THE INVENTION

This invention relates to stabilized polymer blends that may be used for films, sheets, or injection molded articles. Stabilization of the polymer blends includes a phosphorus-containing compound and a hindered amine light stabilizer (HALS). The stabilized polymer blends exhibit improved hydrolytic stability and weatherability.

### BACKGROUND OF THE INVENTION

Transesterification reactions between the polycarbonate and polyesters can occur during melt blending that result in the deterioration of rheological and physical properties and generation of gaseous by-products, such as carbon dioxide. In addition, melt blending of polycarbonate and polyesters can result in an unacceptable increase in color despite the fact that the components themselves are initially colorless. It is generally accepted that both transesterification and color generation during melt blending are promoted by metallic catalyst residues from the polycondensation processes used to manufacture polyesters. These problems are overcome in practice by addition of a stabilizer often referred to in the art as a catalyst deactivator or catalyst quencher that functions to deactivate the metallic catalyst residues. The use of phosphorus-containing compounds to deactivate metallic catalyst residues is disclosed in US Patents 4,532,290 and 4,401,804. Examples of phosphorus-containing compounds that are suitable as catalyst deactivators include bis(2,4-di-t-butylphenyl) pentaerythritol diphosphite (Ultranox 626 available from GE Specialty Chemicals), distearyl pentaerythritol diphosphite (Weston 619 available from GE Specialty Chemicals), and bis(2,4-dicumylphenyl) pentaerythritol diphosphite (Doverphos 9228 available from Dover Chemical Corporation). It is known that phosphorus containing compounds partially hydrolyze to generate acidic species over time and during extrusion processing. Hydrolysis is a prerequisite for effective catalyst deactivation (see for example, Polym. Eng. Sci. 29(18) 1226 (1989), Polym. Bull. 21 327 (1989), and J. Appl. Polym. Sci. 40 977 (1990)). Inorganic phosphite ester compounds such as metal salts of phosphite ester compounds may also be used as catalyst quenchers; however, they may impart haze or loss of clarity to the blends. Stabilization of polycarbonate-polyester blends using phosphorus-containing compounds is disclosed in US Patents 3,953,539, 4,088,709, 4,532,290, 4,981,898, 5,441,997, 5,907,026, and 6,221,556.

The detrimental effect of phosphorus-containing catalyst quenchers on the hydrolytic stability of polycarbonate and polycarbonate-polyester blends is disclosed in US Patents 4,456,717, 5,354,791, 5,744,526, 6,103,796, 4,393,158, and 6,107,375. Improved hydrolytic stability for polycarbonates stabilized with phosphorus-containing compounds and siloxanes containing oxetane groups are disclosed in US Patent 4,456,717. Improved hydrolytic stability for polycarbonates stabilized with phosphorus-containing compounds and an oligomer or polymer containing at least one pendant cyclic iminoether group per molecule is disclosed in US Patent 6,107,375. Improved hydrolytic stability for polycarbonates stabilized with phosphorus-containing compounds and an epoxy compound is disclosed in US Patent 4,393,158. Improved hydrolytic stability for polycarbonate-polyester blends stabilized with phosphorus-containing compounds and a polyester having epoxy functionality is disclosed in US Patent 5,354,791. Improved hydrolytic stability for polycarbonates stabilized with phosphorus-containing compounds and hexamethylenetetraamine is disclosed in US Patent 5,744,526. Specifically, US Patent 5,744,526 teaches the addition of the amine to stabilize the phosphite against hydrolysis and consequently improving the hydrolytic stability of the polycarbonate composition. Similarly, improved hydrolytic stability of certain phosphorus containing compounds by addition of a hindered amine light stabilizer (HALS) is disclosed in US Patent 6,103,796.

There is a need in the art for compounds that are useful in deactivating metal catalyst residues in polycarbonate, polyesters and polyester/polycarbonate blends without compromising the hydrolytic stability or weatherability of the polymer composition.

### SUMMARY OF THE INVENTION

The present invention relates to a polymer as presenttly claimed.
The present invention provides stabilizer blends that are useful for deactivating metal catalyst residues in polycarbonates, polyesters, and polycarbonate-polyester blend compositions without compromising the hydrolytic stability or weatherability of the polymer composition. This invention more specifically provides unexpected improvements in hydrolytic stability and weatherability of polycarbonate-polyester blends stabilized with phosphorus-containing catalyst quenchers and hindered amine light stabilizers (HALS) as described herein.

### DETAILED DESCRIPTION OF THE INVENTION

The present invention demonstrates the use of a combination of additives that improve the hydrolytic stability and weatherability of polycarbonate-polyester blends. The present invention provides a polymer blend comprising:
(A) one or more polyester and (D) at least one polycarbonate according to claim 1,
(B) one or more phosphorus-containing compound(s) having a formula consistent with the following formulae: 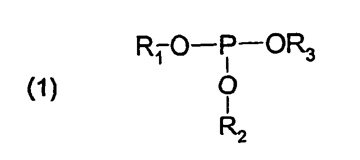 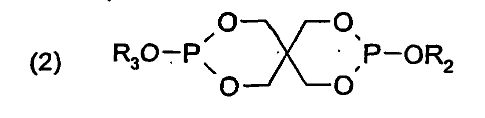 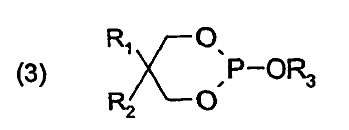 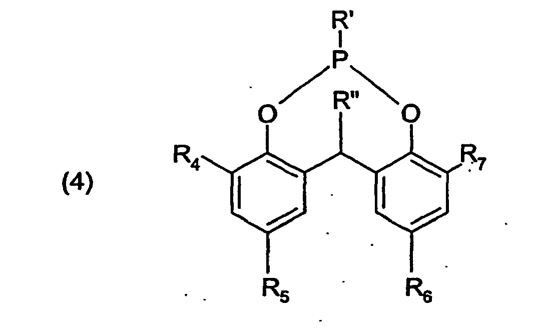 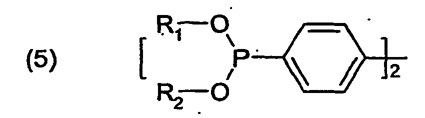 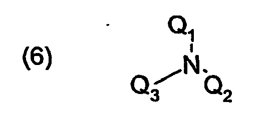 wherein
   R₁, R₂ and R₃ are independently selected from C₁-C₂₂-alkyl, substituted C₁-C₂₂-alkyl, C₃-C₈-cycloalkyl, substituted C₃-C₈-cycloalkyl, and heteroaryl;
   R' is selected from halogen or OR₁;
   R", R₄, R₅ R₆, and R₇ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl;
   each Q₁, Q₂ and Q₃ group is independently radical A, wherein radical A has the following structure: 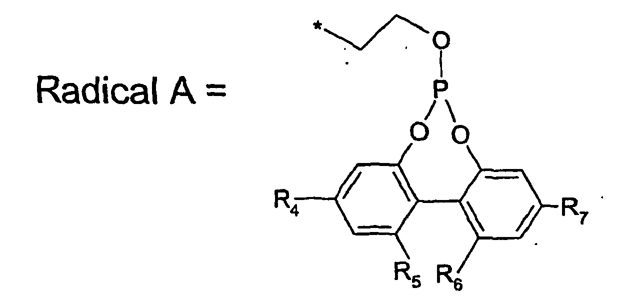
(C) one or more hindered amine light stabilizers (HALS) preferably having a formula consistent with the following formulae: 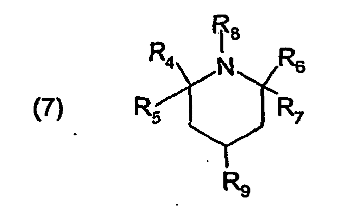 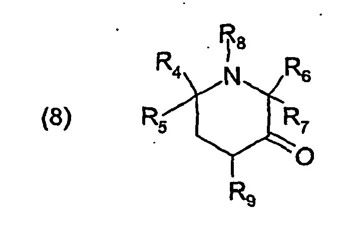 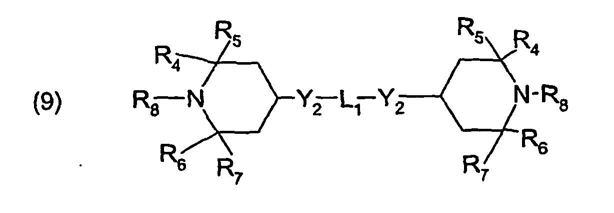 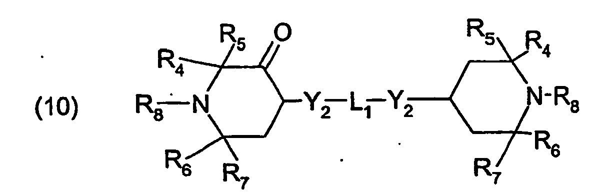 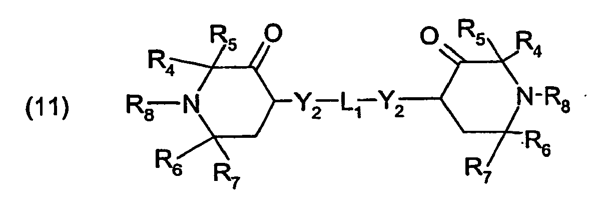 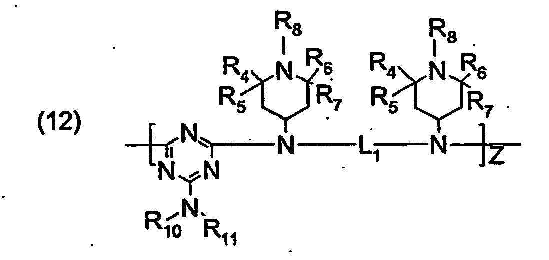 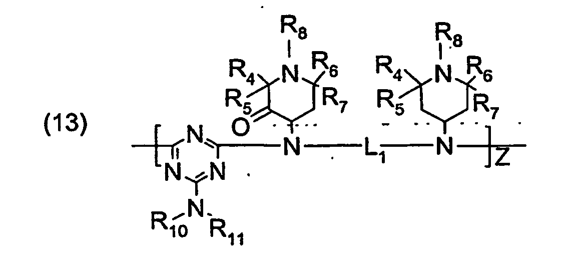 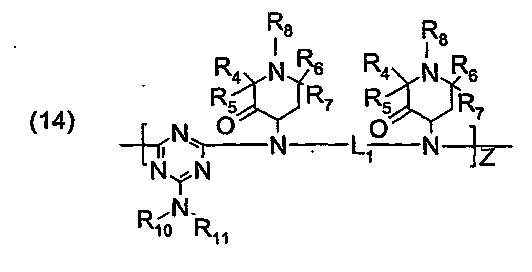 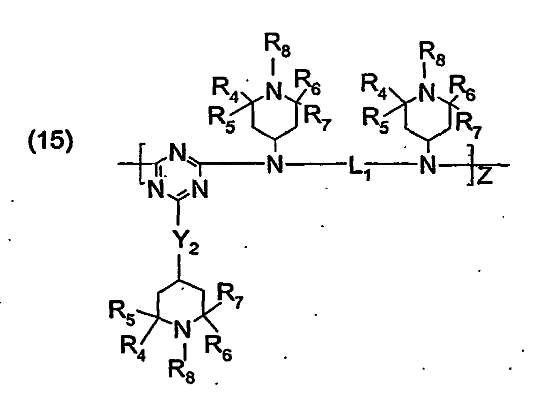 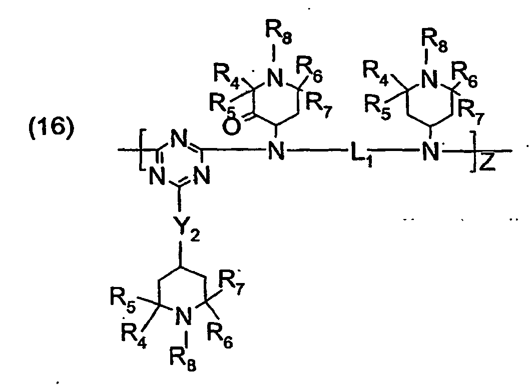 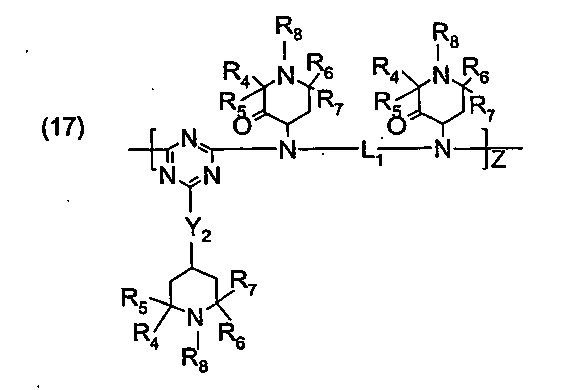 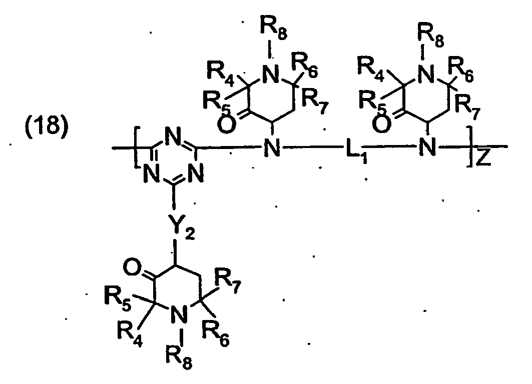 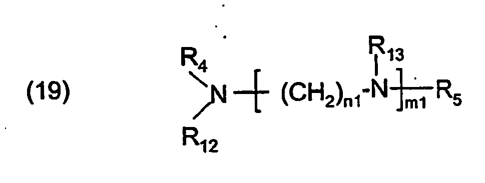 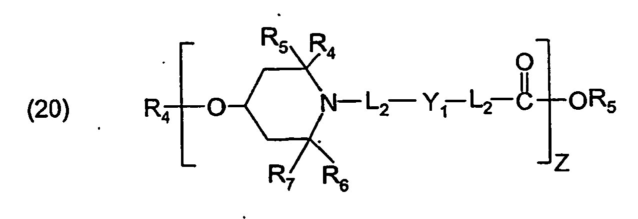 wherein
   R₈ is selected from hydrogen, -OR₆, C₁-C₂₂-alkyl, substituted C₁-C₂₂-alkyl, C₃-C₈-cycloalkyl, substituted C₃-C₈-cycloalkyl;
   R₉ is selected from hydrogen; C₁-C₂₂-alkyl, substituted C₁-C₂₂-alkyl, C₃-C₈-cycloalkyl, substituted C₃-C₈-cycloalkyl, heteroaryl, aryl, -Y₁-R₄ or a succinimido group having the formula: 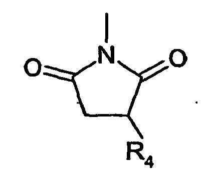 R₁₀ and R₁₁ are independently selected from hydrogen, C₁-C₂₂-alkyl, substituted C₁-C₂₂-alkyl, C₃-C₈-cycloalkyl, and substituted C₃-C₈-cycloalkyl;
   R₁₀ and R₁₁ collectively may represent a divalent group forming a ring with the nitrogen atom to which they are attached, e.g., morpholino, piperidino and the like;
   L₁ is a divalent linking group selected from C₂-C₂₂-alkylene; -(CH₂CH₂-Y₁)₁₋₃-CH₂CH₂-; C₃-C₈-cycloalkylene; arylene; or -CO-L₂-OC-;
   L₂ is selected from C₁-C₂₂-alkylene, arylene, -(CH₂CH₂-Y₁)₁₋₃-CH₂CH₂- and C₃-; C₈-cycloalkylene;
   Y₁ is selected from -OC(O)-, -NHC(O)-, -O-, -S-, -N(R₄)-;
   Y₂ is selected from -O- or -N(R₄)-;
   Z is a positive integer of up to about 20, preferably up to about 6;
   m1 is selected from 0 to about 10;
   n1 is a positive integer selected from 2 to about 12;
   R₁₂ and R₁₃ are independently selected from hydrogen, C₁-C₂₂-alkyl, substituted C₁-C₂₂-alkyl, heteroaryl, and radical B wherein radical B is selected from the following structures: 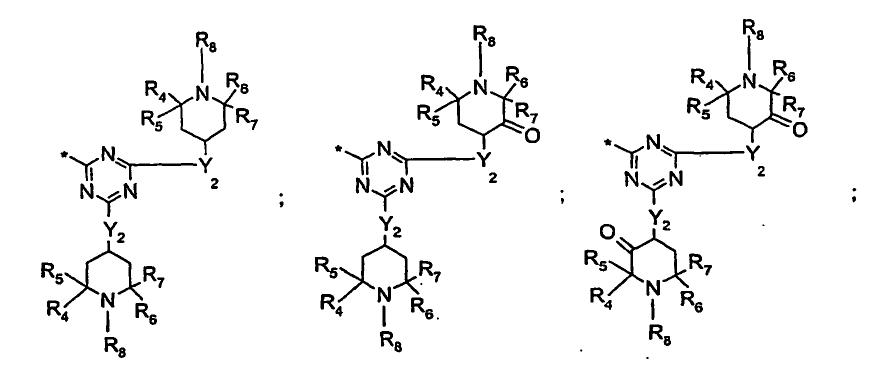
Radical B structures wherein * designates the position of attachment.
wherein at least one of R₁₂ and R₁₃ is radical B.

It is preferred that the polymer composition(s) contain up to about 0.5 weight percent, preferably, from about 0.15 to 0.35 weight percent, of the phosphorus-containing species and up to about 1.0 weight percent, preferably, from about 0.1 weight percent to about 0.75 weight percent, of the HALS based on the total weight of the polymer composition.

Wherever an R group, L group, Y group, Z group, m group or n group is defined herein, the definition for a particular group remains the same throughout this description regardless of whether it is used for multiple formulas or types of compounds unless otherwise specified.

The term "aryl" is used to denote an aromatic radical containing 6,10 or 14 carbon atoms in the conjugated aromatic ring structure and these radicals substituted with one or more groups selected from C₁-C₆-alkyl; C₁-C₆-alkoxy; phenyl, and phenyl substituted with C₁-C₆-alkyl; C₁-C₆-alkoxy; halogen and the like; C₃-C₈-cycloalkyl; halogen; hydroxy, cyano, trifluoromethyl and the like. Typical aryl groups include phenyl, naphthyl, phenylnaphthyl, anthryl (anthracenyl) and the like. The term "heteroaryl" is used to describe conjugated cyclic radicals containing at least one hetero atom selected from sulfur, oxygen, nitrogen or a combination of these in combination with from two to about ten carbon atoms and these heteroaryl radicals substituted with the groups mentioned above as possible substituents on the aryl radical. Typical heteroaryl radicals include: 2-and 3-furyl, 2- and 3-thienyl, 2- and 3-pyrrolyl, 2-, 3-, and 4-pyridyl, benzothiophen-2-yl; benzothiazol-2-yl, benzoxazol-2-yl, benzimidazol-2-yl, 1, 3, 4-oxadiazol-2-yl, 1, 3, 4-thiadiazol-2-yl, 1,2,4-thiadiazol-5-yl, isothiazol-5-yl, imidazol-2-yl, quinolyl and the like.

The terms "C₁-C₆-alkoxy" and "C₂-C₆-alkanoyloxy" are used to represent the groups -O-C₁-C₆-alkyl and -OCOC₁-C₆-alkyl, respectively, wherein "C₁-C₆-alkyl" denotes a saturated hydrocarbon that contains 1-6 carbon atoms, which may be straight or branched-chain, and which may be further substituted with one or more groups selected from halogen, methoxy, ethoxy, phenyl, hydroxy, acetyloxy and propionyloxy. The term "halogen" is used to represent fluorine, chlorine, bromine, and iodine; however, chlorine and bromine are preferred.

The term "C₂-C₂₂-alkylene" is used to denote a divalent hydrocarbon radical that contains from two to twenty-two carbons and which may be straight or branched chain and which may be substituted with one or more substituents selected from hydroxy, halogen, C₁-C₆-alkoxy, C₂-C₆-alkanolyloxy and aryl. The term "C₃-C₈-cycloalkylene" is used to denote divalent cycloaliphatic radicals containing three to eight carbon atoms and these are optionally substituted with one or more C₁-C₆-alkyl groups. The term "arylene" is used to denote 1,2-, 1,3-, and 1,4-phenylene radicals and these optionally substituted with C₁-C₆- alkyl, C₁-C₆-alkoxy and halogen.

The terms "phosphorus-containing compound(s)" includes but is not limited to compounds sold under the following tradenames: Irgafos TNPP (Ciba Specialty Chemicals, CAS# 26523-78-4), Irgafos 168 (Ciba Specialty Chemicals, CAS# 31570-04-4), Ultranox 626 (GE Specialty Chemicals, CAS# 26741-53-7), Mark PEP 36 (Asahi Denka Co., Ltd., CAS#80693-00-1), Mark HP-10 (Asahi Denka Co., Ltd., CAS# 140221-14-3), Irgafos P-EPQ (Ciba Specialty Chemicals, CAS# 38613-77-3), Sandostab P-EPQ (Clariant Corp., CAS# 119345-01-6), Ethanox 398 (Albemarle Corp., CAS# 118337-09-0), Weston 618 (GE Specialty Chemicals, CAS# 3806-34-6), Irgafos 12 (Ciba Specialty Chemicals, CAS# 80410-33-9), Irgafos 38 (Ciba Specialty Chemicals, CAS# 145650-60-8), Ultranox 641 (GE Specialty Chemicals, CAS# 161717-32-4), Doverphos S-9228 (Dover Chemical Corp. CAS# 154862-43-8) and the like. More preferred are bis(2,4-di-t-butylphenyl) pentaerythritol diphosphite (Ultranox 626 available from GE Specialty Chemicals), distearyl pentaerythritol diphosphite (Weston 619 available from GE Specialty Chemicals), and bis(2,4-dicumylphenyl) pentaerythritol diphosphite (Doverphos 9228 available from Dover Chemical Corporation). The most preferred is distearyl pentaerythritol diphosphite (Weston 619 available from GE Specialty Chemicals).

The term "HALS" include but are not limited to Cyasorb UV-3346 (Cytec Industries, CAS# 90751-07-8), Cyasorb UV-3529 (Cytec Industries, CAS# 193098-40-7), Cyasorb UV-3641 (Cytec Industries, CAS# 106917-30-0), Cyasorb UV-3581 (Cytec Industries, CAS# 79720-19-7), Cyasorb UV-3853 (Cytec Industries, CAS# 167078-06-0), Cyasorb UV-3853S (Cytec Industries, CAS# 24860-22-8), Tinuvin 622 (Ciba Specialty Chemicals, CAS# 65447-77-0), Tinuvin 770 (Ciba Specialty Chemicals, CAS# 52829-07-9), Tinuvin 144 (Ciba Specialty Chemicals, CAS# 63843-89-0), Tinuvin 123 (Ciba Specialty Chemicals, CAS# 129757-67-1), Chimassorb 944 (Ciba Specialty Chemicals, CAS# 71878-19-8), Chimassorb 119 (Ciba Specialty Chemicals, CAS# 106990-43-6), Chimassorb 2020 (Ciba Specialty Chemicals, CAS# 192268-64-7), Lowilite 76 (Great Lakes Chemical Corp., CAS# 41556-26-7), Lowilite 62 (Great Lakes Chemical-Corp., CAS# 65447-77-0), Lowilite 94 (Great Lakes-Chemical Corp., CAS# 71878-19-8), Uvasil 299LM (Great Lakes Chemical Corp., CAS# 182635-99-0), and Uvasil 299HM (Great Lakes Chemical Corp., CAS# 182635-99-0), Dastib 1082 (Vocht a.s., CAS# 131290-28-3), Uvinul 4049H (BASF Corp., CAS# 109423-00-9), Uvinul 4050H (BASF Corp., CAS# 124172-53-8), Uvinul 5050H (BASF Corp., CAS# 199237-39-3), Mark LA 57 (Asahi Denka Co., Ltd., CAS# 64022-61-3), Mark LA 52 (Asahi Denka Co., Ltd., CAS# 91788-83-9), Mark LA 62 (Asahi Denka Co., Ltd., CAS# 107119-91-5), Mark LA 67 (Asahi Denka Co., Ltd., CAS# 100631-43-4), Mark LA 63 (Asahi Denka Co., Ltd. Co., Ltd. Co., CAS# 115055-30-6), Mark LA 68 (Asahi Denka Co., Ltd., CAS# 100631-44-5), Hostavin N 20 (Clariant Corp., CAS# 95078-42-5), Hostavin N 24 (Clariant Corp., CAS# 85099-51-1, CAS# 85099-50-9), Hostavin N 30 (Clariant Corp., CAS# 78276-66-1), Diacetam-5 (GTPZAB Gigiena Truda, USSR, CAS# 76505-58-3), Uvasorb-HA 88 (3V Sigma, CAS# 136504-96-6), Goodrite UV-3034 (BF Goodrich Chemical Co., CAS# 71029-16-8), Goodrite UV-3150 (BF Goodrich Chemical Co., CAS# 96204-36-3), Goodrite UV-3159 (BF Goodrich Chemical Co., CAS# 130277-45-1), Sanduvor 3050 (Clariant Corp., CAS# 85099-51-0), Sanduvor PR-31 (Clariant Corp., CAS# 147783-69-5), UV Check AM806 (Ferro Corp., CAS# 154636-12-1), Sumisorb TM-061(Sumitomo Chemical Company, CAS# 84214-94-8), Sumisorb LS-060 (Sumitomo Chemical Company, CAS# 99473-08-2), Uvasil 299 LM (Great Lakes Chemical Corp., CAS# 164648-93-5), Uvasil 299 HM (Great Lakes Chemical Corp., CAS# 164648-93-5), Nylostab S-EED (Clariant Corp., CAS# 42774-15-2). Additional preferred hindered amine light stabilizer may be listed in the Plastic Additives Handbook 5th Edition (Hanser Gardner Publications, Inc., Cincinnati, OH, USA, 2001).

The hindered amine light stabilizers having above formulas (12), (13), (14), (15), (16), (17), (18) and (19) represent the preferred basic compounds. Chimassorb 944 (Ciba Specialty Chemicals, CAS# 71878-19-8), Cyasorb UV-3529 (Cytec Industries, CAS# 193098-40-7), Chimassorb 119 (Ciba Specialty Chemicals, CAS# 106990-43-6) and Tinuvin 770 (Ciba Specialty Chemicals, CAS# 52829-07-9) and any equilavents thereof are specific examples-of the preferred basic compounds: A more preferred groups of the basic nitrogen compounds are the hindered amine light stabilizers having above formulas (12), (13), (14), (15), (16), (17), (18) and (19) wherein radical R₈ is hydrogen or alkyl. The most preferred are HALS that contain an sp³-hybridized nitrogen atom that is not contained within the substituted piperidine ring. These HALS are typically commercially available polymeric or oligomer, high molecular weight HALS wherein the molecular weight is greater than about 1000 such as Cyasorb UV-3529 (Cytec Industries, CAS# 193098-40-7). The most preferred HALS correspond to formula (12) set forth above wherein R₄ R₅ = R₆ = R₇ = R₈ = methyl, (R₁₀)(R11)N- collectively represent morpholino, L₁ is hexamethylene, and Z is 1 to 6.
The chemical name for Chimassorb 119^{®} is 1,3,5-triazine-2,4,6-triamine, N,N'-1,2-ethane-diyl-bis[[[4,6-bis-[butyl-1,2,2,6,6,-pentamethyl-4-piperidlnyl)amino]-1,3,5-triazine-2-yl]amino]-3,1-propanediyl]]bis[N,N"-dibutyl N,N"bis-(1,2,2,6,6,-pentamethyl-4-piperidinyl)-.

The polyester of component (A) includes linear amorphous or crystalline thermoplastic polyesters produced by conventional polymerization techniques from one or more diols and one or more dicarboxylic acids or ester-forming equivalent thereof such as a dicarboxylate ester. The polyesters normally are molding or fiber grade and have an inherent viscosity (I.V.) of about 0.4 to about 1.2 dUg measured at 25°C in a 60/40 ratio by weight of phenol/tetrachloroethane. Typical polyesters of component (A) comprise:
(1) diacid residues comprising at least 50 mole percent terephthalic acid residues, 1,4-cyclohexanedicarboxylic add residues or a mixture thereof, and
(2) diol residues comprising at least 50 mole percent of ethylene glycol residues, cyclohexanedimethanol residues, or a mixture thereof;
wherein the total of the diacid residues is equal to 100 mole percent and the total of the diol residues also is equal to 100 mole percent. The polyesters of component (A) typically contain up to about 200 ppmw of metal catalyst residues, e.g., 10 to 200 ppmw Ti, Co and/or Mn residues.

The diol residues of the component (A) polyesters may be derived from one or more of the following diols: 2,6-decahydronaphthalenedimethanol, ethylene glycol, 1,4-cyclohexanedimethanol, 1,2-propanediol, 1,3-pmpanediol, 1,4-butanediol, 2,2-dimethyl-1,3-propanediol, 1,6-hexanediol, 1,2-cyclohexanediol, 1,4-cyclohexanediol, 1,2-, 1,3-and 1,4-cyclohexanedimethanol; 2,2,4,4-tetramethyl-1,3-cyclobutane diol, bis[4-(2-hydroxyethoxy)phenyl] sulfone, 1,4:3,6-dianhydro-sorbitol, 4,4'-isopropylidenedicyclohexanol, Z-8-bis(hydroxymethyl)-tricyclo-[5.2.1.0]-decane wherein Z represents 3, 4, or 5; and diols containing one or more oxygen atoms in the chain, e.g., diethylene glycol, triethylene glycol, dipropylene glycol, tripropylene glycol and the like. In general, these diols contain 2 to 18, preferably 2 to 8 carbon atoms. Cycloaliphatic diols can be employed in their cis or trans configuration or as mixtures of both forms.

The diacid residues of the component (A) polyesters may be derived from a variety of aliphatic, alicyclic, and aromatic dicarboxylic acids. Examples of the dicarboxylic acids from which the diacid residues may be obtained include 2,6-decahydronaphthalenedicarboxylic acid, terephthalic acid, isophthalic acid, 1,4-cyclohexanedicarboxylic acid, 1,3-cyclohexanedicarboxylic acid, succinic acid, glutaric acid, adipic acid, sebacic acid, 1,12-dodecanedioic acid, 2,6-naphthalenedicarboxylic acid and the like. The diacid residues may be obtained from the dicarboxylic acid or ester forming derivatives thereof such as esters of the dicarboxylic acid, e.g., dimethyl dicarboxylate esters, acid halides and, in some cases, anhydrides.

One or more branching agents also may be useful in making the polyesters formed within the context of the invention. Although not required, it is preferred that the optional branching agent is present in polyester component (A) in an amount of less than 5 mole percent wherein the total mole percent of the dicarboxylic acid component equals 100 mole percent and the total mole percent of the diol component equals 100 mole %. The branching agent may provide branching in the acid unit portion of the polyester, or in the glycol unit portion, or it can be a hybrid. Some of these branching agents have already been described herein. However, illustrative of such branching agents are polyfunctional acids, polyfunctional glycols and acid/glycol hybrids. Examples include tri- or tetra-carboxylic acids, such as trimesic acid, pyromellitic acid and lower alkyl esters thereof and the like, and tetrols such as pentaerythritol. Also triols such as trimethylopropane or dihydroxy carboxylic acids and hydroxydicarboxylic acids and derivatives, such as dimethyl hydroxy terephthalate, and the like are useful within the context of this invention. Trimellitic anhydride is a preferred branching agent. The branching agents may be used either to branch the polyester itself or to branch the polyester/polycarbonate blend of the invention.

It is preferred that polyester component (A) comprise about 30 to 100 mole percent 1,4-cyclohexanedimethanol residues wherein the total mole percentages of diol residues of the polyester equals 100 mole percent. In this embodiment, it is also preferred that polyester component (A) comprises 0 to about 70 mole percent ethylene glycol residues. While the diacid residues present in this embodiment may be derived from any diacid, it is preferred that the diacid residues comprise terephthalic acid, isophthalic acid and/or 1,4-cyclohexanedicarboxylic acid residues. When terephthalic acid residues are present, polyester component (A) comprises about 65 to 100 mole percent terephthalic acid residues and about 0 to 35 mole percent isophthalic acid residues.

Thus, one group of preferred polyesters have an inherent viscosity of about 0.4 to 1.2, preferably 0.4 to 0.8, dUg measured at 25°C in a 60/40 ratio by weight of phenol/tetrachloroethane and comprise:
(1) diacid residues comprising about 80 to 100 mole percent terephthalic acid residues and about 0 to 20 mole percent isophthalic acid residues; and
(2) diol residues comprising about 40 to 100 mole percent, preferably 55 to 80 mole percent, 1,4-cyclohexanedimethanol residues and 0 to about 60 mole percent, preferably about 20 to 45 mole percent, ethylene glycol residues;
wherein the total of the diacid residues is equal to 100 mole percent and the total of the diol residues also is equal to 100 mole percent.

Another group of preferred polyesters have an inherent viscosity of about 0.4 to 1.2, preferably about 0.4 to 0.8, dUg measured at 25°C in a 60/40 ratio by weight of phenol/tetrachloroethane and comprise:
(1) diacid residues comprising about 65 to 83 mole percent, preferably about 70 to 80 mole percent, terephthalic acid residues and about 35 to 17 mole percent, preferably 30 to 20 mole percent, isophthalic acid residues; and
(2) diol residues comprising about 80 to 100 mole percent, preferably 90 to 100 mole percent, 1,4-cyclohexanedimethanol residues and about 0 to about 20 mole percent, preferably 0 to 10 mole percent, ethylene glycol residues;
wherein the total of the diacid residues is equal to 100 mole percent and the total of the diol residues also is equal to 100 mole percent.

Yet another group of preferred polyesters have an inherent viscosity of about 0.4 to 1.2, preferably about 0.4 to 0.8, dUg measured at 25°C in a 60/40 ratio by weight of phenol/tetrachloroethane and comprise:
(1) diacid residues comprising at least about 80 to 100 mole percent, preferably 90 to 100 mole percent, and more preferably 100 mole percent 1,4-cyclohexanedicarboxylic acid residues; and
(2) diol residues comprising about 80 to 100 mole percent, preferably 90 to 100 mole percent, most preferably 100 mole percent, 1,4-cyclohexanedimethanol residues and about 0 to about 20 mole percent, preferably 0 to 10 mole percent, most preferably 0 ethylene glycol residues;
wherein the total of the diacid residues is equal to 100 mole percent and the total of the diol residues also is equal to 100 mole percent.

In yet another preferred embodiment, the polyesters have an inherent viscosity of about 0.4 to 1.2, preferably about 0.4 to 0.8, dUg measured at 25°C in a 60/40 ratio by weight of phenol/tetrachloroethane and comprise:
(1) diacid residues comprising about 80 to 100 mole percent, preferably 80 to 99.9 mole percent, more preferably 90 to 100 mole percent, and even more preferably 90 to 99.9 mole percent, terephthalic acid residues and about 0 to 20 mole percent, preferably 0.1 to 20 mole percent, more preferably 0 to 10 mole percent, and even more preferably 0.1 to 10 mole percent, isophthalic acid residues; and
(2) diol residues comprising about 25 to 37 mole percent, preferably 28 to 34 mole percent, 1,4-cyclohexanedimethanol residues and about 75 to about 63 mole percent, preferably about 72 to 66 mole percent, ethylene glycol residues;
wherein the total of the diacid residues is equal to 100 mole percent and the total of the diol residues also is equal to 100 mole percent.

Even further, another group of preferred polyesters have an inherent viscosity of about 0.4 to 1.2, preferably about 0..5 to 1.0 dUg measured at 25°C in a 60/40 ratio by weight of phenol/tetrachloroethane and comprise:
(1) diacid residues comprising terephthalic acid residues from 0.01 to 100 mole percent, preferably at least 40 mole percent; more preferably, 80 to 100 mole percent, and even more preferably from 90 to 100 mole percent, and
(2) diol residues comprising about 52 to 75 mole percent, preferably 52 to 65 mole percent of, 1,4-cyclohexanedimethanol residues and about 25 to 48 mole percent, preferably 35 to 48 mole percent of ethylene glycol residues;
wherein the total of the diacid residues is equal to 100 mole percent and the total of the diol residues also is equal to 100 mole percent. Branching agents are preferred in this embodiment more preferably in the amount of 0.05 to 1.0 mole percent of a trifunctional monomer.

The linear polyesters may be prepared according to polyester-forming procedures and conditions well known in the art. For example, a mixture of one or more dicarboxylic acids, preferably aromatic dicarboxylic acids, or ester forming derivatives thereof, and one or more diols may be heated.in the presence of an esterification catalyst and/or polyesterification catalysts at temperatures in the range of about 150 to about 300°C and pressures in the range of from of atmospheric to about 0.2 Torr. Normally, the dicarboxylic acid or derivative thereof is esterified or transesterified with the diol(s) at atmospheric pressure and at a temperature at the lower end of the specified range. Polycondensation then is affected by increasing the temperature and lowering the pressure while excess diol is removed from the mixture. A preferred temperature range for a polyester condensation is about 260 to about 300°C.

Typical catalyst or catalyst systems for polyester condensation are well known in the art. For example, the catalysts disclosed in U.S. Patents 4, 025,492; 4,136,089; 4,176,224; 4,238,593; and 4,208,527, incorporated herein by reference, are deemed suitable in this regard. Further, R. E. Wilfong, Journal of Polymer Science, 54 385 (1961) sets forth typical catalysts which are useful in polyester condensation reactions. The most preferred catalysts are complexes of titanium, manganese and cobalt. It is understood that phosphorus-containing molecules can be added in addition to metal catalysts.

The term "polycarbonate" as used herein embraces those polycarbonates comprising repeating units or residues of the formula 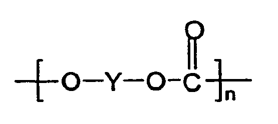 wherein Y is a divalent aromatic or aliphatic radical derived from a dihydroxyaromatic compound or a dihydroxyaliphatic compound of the formula HO-Y-OH. Typical dihydroxyaromatic compounds are 2,2-bis-(4-hydroxyphenyl)propane, also known as bisphenol A; bis(4-hydroxyphenyl)methane; 2,2-bis(4-hydroxy-3-methylphenyl)-propane; 4,4-bis(4-hydroxyphenyl)heptane; 2,2-(3,5,3",5'-tetrachloro-4,4'-dihydroxyphenyl)propane; 2,2-(3,5,3',5'-tetrabromo-4,4'-dihydroxyphenol)propane; 3,3'-dichtoro-3,3'-dichloro-4,4'-dihydroxydiphenyl)methane; 2,2'-dihydroxyphenyl-sulfone, and 2,2'-dihydroxyl phenylsulfide. Most preferably, HO-Y-OH is 2,2-bis-(4-hydroxyphenyl)propyl, in which case, the polycarbonate is a "bisphenol A polycarbonate". Examples of dihydroxyaliphatic compounds include 1,4-cyclohexanedimethanol, 1,2-propanediol, 1,3-propanediol, 1,4-butanediol, 2,2-dimethyl-1,3-propanediol, 1,6-hexanediol, 2,6-decahydronaphthalenedimethanol, 1,2-cyclohexanediol, 1,4-cyclohexanediol, 1,2-cyclohexanedimethanol, 1,3-cyclohexanedimethanol, isosorbide, 4,4'-isopropylidenedicyclohexanol, 2,2,4,4-tetramethylcyclobutane-1,2-diol, Z,8-bis(hydroxymethyl)-tricyclo-[5.2:1:0]-decane wherein Z-represents 3, 4, or 5; and diols containing one or more oxygen atoms in the chain, e.g., diethylene glycol, triethylene glycol, dipropylene glycol, tripropylene glycol and the like. In general, these diols contain 2 to 18, preferably 2 to 8 carbon atoms. Cycloaliphatic diols can be employed in their cis or trans configuration or as mixtures of both forms. Branched polycarbonates are also useful in the present invention.

The polycarbonates comprising component (D) of the above-described embodiment of the present invention may be prepared according to known procedures by reacting the dihydroxyaromatic compound with a carbonate precursor such as phosgene, a haloformate or a carbonate ester, a molecular weight regulator, an acid acceptor and a catalyst. Methods for preparing polycarbonates are known in the art and are described, for example, in U.S. Patent 4,452,933

Examples of suitable carbonate precursors include carbonyl bromide, carbonyl chloride, and mixtures thereof; diphenyl carbonate; a di(halophenyl)-carbonate, e.g., di(trichlorophenyl) carbonate, di(tribromophenyl) carbonate, and the like; di(alkylphenyl)carbonate, e.g., di(tolyl)carbonate; di(naphthyl)carbonate; di(chloronaphthyl)carbonate, or mixtures thereof; and bis-haloformates of dihydric phenols.

Examples of suitable molecular weight regulators include phenol, cyclohexanol, methanol, alkylated phenols, such as octylphenol, para-tertiary-butylphenol, and the like. The preferred molecular weight regulator is phenol or an alkylated phenol.

The acid acceptor may be either an organic or an inorganic acid acceptor. A suitable organic acid acceptor is a tertiary amine and includes such materials as pyridine, triethylamine, dimethylaniline, tributylamine, and the like. The inorganic acid acceptor can be either a hydroxide, a carbonate, a bicarbonate, or a phosphate of an alkali or alkaline earth metal.

The catalysts that can be used are those that typically aid the polymerization of the monomer with- phosgene. Suitable catalysts-include tertiary amines such as triethylamine, tripropylamine, N,N-dimethylaniline, quantemary ammonium compounds such as, for example, tetraethylammonium bromide, cetyl triethyl ammonium bromide, tetra-n-heptylammonium iodide, tetra-n-propyl ammonium bromide, tetramethyl ammonium chloride, tetra-methyl ammonium hydroxide, tetra-n-butyl ammonium iodide, benzyltrimethyl ammonium chloride and quaternary phosphonium compounds such as, for example, n-butyltriphenyl phosphonium bromide and methyltriphenyl phosphonium bromide.

The polycarbonate of component (D) also may be a copolyestercarbonate such as those described in U.S. Patents 3,169,121; 3,207,814; 4,194,038; 4,156,069; 4,430,484, 4,465,820, and 4,981,898.

Copolyestercarbonates useful in this invention are available commercially. They are typically obtained by the reaction of at least one dihydroxyaromatic compound with a mixture of phosgene and at least one dicarboxylic acid chloride, especially isophthaloyl chloride, terephthaloyl chloride, or both.

The ratio of polyester component (A) to polycarbonate component (D) is not a critical feature of the present invention, and may be determined by the individual practitioner of this invention. Typically, the weight ratio of polyester (A) to polycarbonate (D) will range from about 99:1 to about 1:99, preferably from about 75:25 to about 25:75, and most preferably is about 75:25 to about 50:50.
The compositions of the present invention also may contain one or more compounds selected from the group consisting of (DD) phenolic antioxidants, (E) water, (F) colorants and pigments such as organic colorants, inorganic colorants and or white pigments such as TiO₂, ZnO and baryta, (G) ultraviolet light absorbers (H) additives such as impact modifiers, plasticizers, halogenated flame-retardants, fillers, nonhalogenated flame-retardants, synergists, processing aids, and other stabilizers known to one skilled in the art; and (I) a recycled polymer.

Another embodiment of the present invention is a polymer concentrate comprising:
(A) one or more polymers selected from the group consisting of polycarbonates, and polyesters;
(B) one or more phosphorus-containing compounds; and/or
(C) one or more hindered amine light stabilizers.
The polymers, phosphorus containing compounds and the hindered amine light stabilizers useful for the concentrate are the same as described herein for other embodiments of the invention. The phosphorus compounds and the HALS compounds may be present separately in the concentrate but are preferably both present. However, whether or not each of the phosphorus containing compounds and the HALS compounds are present together or separately in the concentrate, each may be present in the concentrate in the amount of up to about 10 weight percent, preferably from 5 to 10 weight percent, based on the total weight of the concentrate. For the concentrate, the preferred polyester is one having 100 mole percent terephthalic acid residues, 62 mole percent 1,4-cyclohexanedimethanol residues, and 28 mole percent ethylene glycol residues based on a total mole percent for diacid residues of 100 mole percent and a total mole percent for diol residues of 100 mole percent. The preferred phosphite for the concentrate of the invention is Weston 619 as further described herein and the preferred HALS for the concentrate of the invention is Cyasorb UV-3529 as further described herein.

The term "ultraviolet (UV) light absorbers" is defined as one compound or a mixture of compounds that absorb light in the range of 250-400 nm with a minimal absorbance between 400 and 700. nm and that improves the weatherability of the polymer blends. Preferred examples are triazines, cyanoacrylates, benzotriazoles, naphthalenes, benzophenones, and benzoxazin-4-ones. More preferred are commercially available UV-absorbers such as: Cyasorb UV-9 (Cytec Industries, CAS# 131-57-7), Cyasorb UV-24 (Cytec Industries, CAS# 131-53-3), Cyasorb UV-531 (Cytec Industries, CAS# 1843-05-6), Cyasorb UV-2337 (Cytec Industries, CAS# 25973-55-1), Cyasorb UV-5411 (Cytec Industries, CAS# 3147-75-9), Cyasorb UV-5365 (Cytec Industries, CAS# 2440-22-4), Cyasorb UV-1164 (Cytec Industries, CAS# 2725-22-6); Cyasorb UV-3638 (Cytec Industries; CAS# 18600-59-4), Tinuvin 213 (Ciba Specialty Chemicals, CAS# 1048.10-47-1), Tinuvin 234 (Ciba Specialty Chemicals, CAS# 70321-86-7), Tinuvin 320 (Ciba Specialty Chemicals, CAS# 3846-71-7), Tinuvin 326 (Ciba Specialty Chemicals, CAS# 3896-11-5), Tinuvin 327 (Ciba Specialty Chemicals, CAS# 3864-99-1), Tinuvin 328 (Ciba Specialty Chemicals, CAS# 25973-55-1), Tinuvin 329 (Ciba Specialty Chemicals, CAS# 3147-75-9), Tinuvin 350 (Ciba Specialty Chemicals, CAS# 36437-37-3), Tinuvin 360 (Ciba Specialty Chemicals, CAS# 103597-45-1), Tinuvin 571 (Ciba Specialty Chemicals, CAS# 23328-53-2) and Tinuvin 1577 (Ciba Specialty Chemicals, CAS# 147315-50-2). Additional suitable UV absorbers are listed in the Plastic Additives Handbook 5th Edition (Hanser Gardner Publications, Inc., Cincinnati, OH, USA, 2001). More preferred are benzotriazoles, triazines and benzoxazin-4-ones such as Cyasorb UV-1164 (Cytec Industries, CAS# 2725-22-6), Cyasorb UV-3638 (Cytec Industries, CAS# 18600-59-4), Tinuvin 1577 (Ciba Specialty Chemicals, CAS# 147315-50-2), Tinuvin 234 (Ciba Specialty Chemicals, CAS# 70321-86-7) and Tinuvin 328 (Ciba Specialty Chemicals, CAS#25973-55-1). Most preferred are Cyasorb UV-1164 (Cytec Industries, CAS# 2725-22-6), Cyasorb UV-3638 (Cytec Industries, CAS# 18600-59-4) and Tinuvin 1577 (Ciba Specialty Chemicals, CAS# 147315-50-2. It is obvious that identical molecules sold under different trade names are covered by this invention. It is obvious that combination of W absorbers can be used.

The term "halogenated flame-retardants" is defined as compounds that can contain one or more of the following: fluorine, chlorine, bromine, and iodine, which act in such a way as to decrease the flammability of the polymer composition. More preferred are compounds that contain bromine such as brominated polycarbonate, brominated polystyrene, and the like. The compositions provided by the present invention are useful for improving the hydrolyitc stability of heavy-gauge sheet, cap layers for extruded sheet, cap layers for extruded films, thermoformable sheeting products, injection molded products, thin films, thick films, articles made using thin films, articles using from thick films, articles made using heavy gauge sheet, multilayer films, twin wall sheet, triple wall sheet and the like.

This invention can be further illustrated by the following examples of preferred embodiments thereof, although it will be understood that these examples are included merely for purposes of illustration and are not intended to limit the scope of the invention unless otherwise specifically indicated. Unless otherwise indicated, all weight percentages are based on the total weight of the polymer composition and all molecular weights are weight average molecular weights. Also, all percentages are by weight unless otherwise indicated. Wherever an R group, L group, Y group, Z group, m group or n group is defined herein, the definition for a particular group remains the same throughout this entire description, including the examples of the invention, regardless of whether it is used for multiple formulas or types of compounds unless otherwise specified.

### Examples

In the examples, the following procedures were followed. Samples were cut from 20-mil film and then exposed to 70°C and 100% relative humidity (RH) by suspending the films in the vapor space of sealed jars containing a small amount of water and placed inside a forced air oven set at 70°C in order to evaluate hydrolytic stability. Small samples were subsequently taken periodically and the molecular weight distribution for the polyester and polycarbonate fractions determined using gel permeation chromatography (GPC). The GPC method for the polycarbonate fraction consisted of first immersing the b lends in tetrahydrofuran to selectively extract the polycarbonate. The GPC system used to analyze the polycarbonate fraction consisted of a Perkin-Elmer LC-250 pump, a Perkin-Elmer LC-600 autosampler, and a Perkin-Elmer LC-235 photodiode array UV detector operated at 265 nm. The columns used were a Plgel 5-micron guard, a Mixed-C, and an Oligopore from Polymer Laboratories. The molecular weight distribution was computed using monodisperse polystyrene standards for calibration and the Mark-Houwink constants for polystyrene and polycarbonate available in the literature. The solvent used for the polyester fraction was 70/30-v/v hexafluoroisopropanol/methylene chloride mixture, which is also a good solvent for polycarbonate. The GPC system used consisted of a Perkin-Elmer LC-250 pump, a Perkin-Elmer ISS-200 autosampler, and a Perkin-Elmer LC-95 UV/VIS detector operated at 285 nm. The absorption coefficient of terephthalate based copolyesters at 285 nm is considerably greater than the coefficient for polycarbonate so that the method selectively detects the polyester. The columns used were a Plgel 5-micron guard and a Mixed-C from Polymer Laboratories. The molecular weight distribution was computed using monodisperse polystyrene standards for calibration and Mark-Houwink constants for polystyrene measured in this solvent. Universal calibration constants for the polyester were chosen to yield accurate molecular weight values for a series of polyester samples that were characterized by light scattering measurement.

Samples were cut from sheet to produce 2.5 by 5.5 inch samples and then exposed in a xenon arc Weather-Ometer sold by Atlas Devices, Inc. using an irradiation of 0.35 W/m² at 340nm, inner and outer borosilicate filters, 55% relative humidity, 63°C black panel temperature, and 18 minutes water spray out of every 2 hours irradiation. Samples were removed periodically to assess changes in color, haze, and impact strength.

The color of the polymer films is determined in a conventional manner using a HunterLab UltraScan Colorimeter manufactured by Hunter Associates Laboratory, Inc., Reston, Virginia. The instrument is operated using HunterLab Universal Software (version 3.8). Calibration and operation of the instrument is according to the HunterLab User Manual and is largely directed by the Universal Software, To reproduce the results on any colorimeter, run the instrument according to its instructions and use the following testing parameters: D65 Light Source (daylight, 6500°K color temperature), Reflectance Mode, Large Area View, Specular Included, CIE 10° Observer, Outputs are CIE L*, a*, b*. An increase in the positive b* value indicates yellowness, while a decrease in the numerical value of b* indicates a reduction in yellowness. Color measurement and practice are discussed in greater detail in Anni Berger-Schunn in Practical Color Measurement, Wiley, NY pages 39-56 and 91-98 (1994).

Haze was measured in a HunterLab UltraScan Colorimeter sold by Hunter Associates Laboratory, Inc. using the following testing parameters: D65 light source, transmittance mode, large area view, and CIE 10° observer.

Impact strength was determined by cutting 0.5 inch wide by 2.5. inch length bars and impacting them according to the ASTM D 256 method for Izod testing except that the test specimen was oriented 90° to the normal Izod method, i.e. the hammer strikes the 0.5 inch wide face of the specimen rather than the edge. In the case of samples exposed in a Weather-Ometer as described above, the impact strength was carried out with the exposed surface being struck by the hammer.

Unless otherwise indicated, all weight percentages are based on the total weight of the polymer composition and all molecular weights are weight average molecular weights. Also, all percentages are by weight unless otherwise indicated.

### Examples 1-10

These examples illustrate the detrimental effect of a phosphorus-containing catalyst quencher on the hydrolytic stability of polycarbonate-polyester blends and the unexpected improvement in hydrolytic stability of the blends by the addition of a (HALS). In reference examples 1-6, polyester A is comprised of 74 mole percent terephthalic acid residues, 26 mole percent isophthalic acid residues and 100 mole percent 1,4-cyclohexanedimethanol residues, based on a total of 100 mole % diacid residues and a total of 100 mole % diol residues, having an inherent viscosity of about 0.74 dUg and containing approximately 100 ppmw titanium metal and polycarbonate A is a bisphenol A polycarbonate (Makrolon 2608, supplied from Bayer Corporation). In reference examples 1-6, blends of polyester A and polycarbonate A (3:1 ratio by weight) were melt blended along with combinations of a phosphorus-containing stabilizer (a phosphite) tradename Doverphos 9228 (believed to be bis(2,4-dicumylphenyl)pentaerythritol diphosphite from the Dover Chemical Company) and a Chimassorb 944 (supplied by Ciba Specialty Chemicals) Chimassorb 944 is believed to be a polymeric HALS having a formula consistent with formula (12) wherein R₄ = R₅ = R₆ = R₇ = methyl; R₈ = hydrogen; L₁ is hexamethylene; R₁₀ = hydrogen; and R₁₁ is a branched octyl group. The additives were precompounded with polyester A using an 19-mm twin-screw extruder at 250°C, 200 RPM, at a rate of 5 lbs/hr to produce concentrates containing 5% additive. The blends were prepared as 20-mil extrusion cast films using a 1" KiHion single-screw extruder at 275°C and 70 RPM. The films were subsequently conditioned at 70°C and 100% relative humidity for up to 3 weeks and the molecular weight of the polyester A and polycarbonate A components determined by GPC as previously described. The results are shown in Table 1. The blends containing the phosphite stabilizer exhibit significantly improved color (i.e. less yellow represented by lower b*) compared to blends without stabilizer reference (Example 1) or blends with the H ALS (Reference Example 6). Example 2 demonstrates the detrimental effect of the phosphite stabilizer on the hydrolytic stability of the blend, especially the polycarbonate A component. The blends containing both the phosphite stabilizer and the HALS (Reference Examples 3, 4, and 5) exhibit significantly improved hydrolytic stability compared to the blend containing the phosphite (Reference Example 2). These examples demonstrate that good color and improved hydrolytic stability of polycarbonate-polyester blends are realized by using a combination of a phosphite stabilizer and a HALS.

**TABLE 1**

| Reference Example # | Doverphos 9228 (wt %) | Chimassorb 944 (wt %) | CIE Color b* | Time @ 70°C & 100%RH | Polyester A | | Polycarbonate A | |
|---|---|---|---|---|---|---|---|---|
| | | | | | Mw | ΔMw (%) | Mw | ΔMw (%) |
| 1 | 0 | 0 | 6.27 | 0 | 21100 | - | 17217 | - |
| | | | | 1 | 21759 | 3.1 | 17451 | 1.4 |
| | | | | 2 | 21647 | 2.6 | 16248 | -5.6 |
| | | | | 3 | 21608 | 2.4 | 17728 | 3.0 |
| 2 | 0.25 | 0 | 0.08 | 0 | 21373 | - | 21636 | - |
| | | | | 1 | 21506 | 0.6 | 15950 | -26.3 |
| | | | | 2 | 20839 | -2.5 | 14251 | -34.1 |
| | | | | 3 | 20774 | -2.8 | 13466 | -37.8 |
| 3 | 0.25 | 0.25 | 0.2 | 0 | 22334 | - | 20013 | - |
| | | | | 1 | 22011 | -1.4 | 18106 | -9.5 |
| | | | | 2 | 21827 | -2.3 | 17817 | -11.0 |
| | | | | 3 | 21922 | -1.8 | 18301 | -8.5 |
| 4 | 0.25 | 0.50 | 0.48 | 0 | 21751 | - | 17401 | - |
| | | | | 1 | 22084 | 1.5 | 16907 | -2.8 |
| | | | | 2 | 21979 | 1.0 | 15655 | -10.0 |
| | | | | 3 | 21833 | 0.3 | 15466 | -11.1 |
| 5 | 0.50 | 0.25 | 0.33 | 0 | 22070 | - | 20728 | - |
| | | | | 1 | 22321 | 1.1 | 18125 | -12.5 |
| | | | | 2 | 21839 | -1.0 | 17580 | -15.2 |
| | | | | 3 | 21401 | -3.0 | 17248 | -16.8 |
| 6 | 0 | 0.25 | 4.44 | 0 | 21781 | - | 17100 | - |
| | | | | 1 | 21759 | -0.1 | 16134 | -5.6 |
| | | | | 2 | 21695 | -0.4 | 14623 | -14.5 |
| | | | | 3 | 21418 | -1.7 | 15542 | -9.1 |

In examples 7-10, polyester B is comprised of 100 mole percent terephthalic acid residues, 62 mole percent cyclohexandimethanol and 38 mole percent ethylene glycol residues having an inherent viscosity of about 0.7 and polycarbonate B is a bisphenol A polycarbonate (tradename Makrolon 1804 supplied by Bayer Corporation and believed to contain about 0.25 wt% of a ultraviolet light absorbing compound and a blue toner colorant). In Examples 7-10, blends of polyester B and polycarbonate B were melt blended along with combinations of a Weston 619 (a phosphite stabilizer, General Electric Specialty Chemicals, believed to be distearylpentaerythritol diphosphite) and Cyasorb UV-3529 (a polymeric HALS supplied by Cytec Industries Inc.) or Cyasorb UV-3346 (a polymeric HALS supplied by Cytec Industries, Inc.) Cyasorb UV-3529 is believed to be a polymeric HALS having a formula consistent with formula (12) wherein R₄ = R₅ = R₆ = R₇ = R₈ = methyl; L₁ is hexamethylene; and (R₁₀)(R₁₁)N- Collectively represent a morpholino group. C yasorb UV-3346 i s believed t o be a polymeric HALS having a formula consistent with formula (12) wherein R₄= R₅= R₆ = R₇= methyl; R₈ = hydrogen; L₁ is hexamethylene; and (R₁₀)(R₁₁)N- collectively represent a morpholino group. The additives were precompounded with Polyester B using an 19-mm APV twin-screw extruder at 250°C, 200 RPM at a rate of 5 Ibs/hr to make concentrates containing 5% additive. The blends were prepared as 20-mil extrusion cast films using a 1" Killion single-screw extruder at 275°C and 70 RPM. The films were subsequently conditioned at 70°C and 100% relative humidity for up to 6 weeks and the molecular weight of the polyester B and polycarbonate B components determined by GPC as previously described. The results are shown in Table 2. The results show that blends containing the phosphite stabilizer exhibit improved color (i.e. less yellow as represented by lower b*) compared to blends without stabilizer (Example 7). T he results also show that blends containing the phosphite stabilizer and a HALS exhibit improved hydrolytic stability compared to blends containing the phosphite (Example 8). These examples demonstrate that good color and improved hydrolytic stability of polycarbonate-polyester blends are realized by using a combination of a phosphite stabilizer and a HALS.

**TABLE 2**

| Example | Weston 619 (wt %) | Cyasorb 3529 (wt %) | Cyasorb 3346 (wt %) | Color b* | Time @ 70°C & 100%RH | Polyester B | | Polycarbonate | |
|---|---|---|---|---|---|---|---|---|---|
| | | | | | | Mw | Δmw (%) | Mw | ΔMw (%) |
| 7 | 0 | 0 | 0 | 0.75 | 0 | 23377 | - | 22506 | - |
| | | | | | 2 | 23756 | 1.6 | 21995 | -2.3 |
| | | | | | 4 | 22884 | -2.1 | 19125 | -15.0 |
| | | | | | 6 | 22472 | -3.9 | 19136 | -15.0 |
| 8 | 0.25 | 0 | 0 | -0.16 | 0 | 22877 | - | 22621 | - |
| | | | | | 2 | 21064 | -7.9 | 14774 | -34.7 |
| | | | | | 4 | 19321 | -15.5 | 11515 | -49.1 |
| | | | | | 6 | 17755 | -22.4 | 9309 | -58.8 |
| 9 | 0.25 | 0.25 | 0 | -0.10 | 0 | 21448 | - | 21473 | - |
| | | | | | 2 | 20896 | -2.6 | 16363 | -23.8 |
| | | | | | 4 | 20837 | -2.8 | 12848 | -40.2 |
| | | | | | 6 | 19802 | -7.7 | 11526 | -46.3 |
| 10 | 0.25 | 0 | 0.25 | 0.16 | 0 | 21362 | - | 21811 | - |
| | | | | | 2 | 21265 | -0.4 | 20325 | -6.8 |
| | | | | | 4 | 21769 | 1.9 | 15645 | -28.3 |
| | | | | | 6 | 20227 | -5.3 | 14492 | -33.5 |

### Examples 11-14

These examples illustrate that the improvement in hydrolytic stability by addition of HALS is independent of the method that the HALS is introduced to the blend. Blends of polyesters B and polycarbonate B (70:30 ratio by weight) were melt blended along with combinations of Weston 619 (General Electric Specialty Chemicals) and Cyasorb UV-3529 (Cytec Industries, Inc). The additives were precompounded with polyester B using an 19-mm APV twin-screw extruder at 250°C, 200 RPM at a rate of 5 Ibs/hr to produce the following concentrates: Concentrate A consisting of 95/5 polyester B/Weston 619, Concentrate B consisting of 95/5 polyester B/Cyasorb UV-3529, and Concentrate C consisting of 84/5/11 polyester B/Weston 619/Cyasorb UV-3529. The blends were prepared as 20-mil extrusion cast films using a 1" Killion single-screw extruder at 250°C and 70 RPM. The films were subsequently conditioned at 70°C and 100% relative humidity for up to 6 weeks and the molecular weight of the polyester B and polycarbonate B components determined by GPC as previously described. The results are shown in Table 3. The blends containing the phosphite stabilizer exhibit improved color (i.e. less yellow as represented by lower b*) compared to blends without stabilizer (Example 11). The blends containing the phosphite stabilizer and HALS exhibit improved hydrolytic stability compared to blends containing the phosphite (Example 12) independent of whether the phosphite and HALS are delivered to the blend via separate concentrates (Example 13) or a single concentrate (Example 14).

**TABLE 3**

| Example | Weston 619 (wt %) | Cyasorb 3529 (wt %) | Color b* | Time @ 70°C & 100%RH | polyester B | | polycarbonate B | |
|---|---|---|---|---|---|---|---|---|
| | | | | | Mw | ΔMw (%) | Mw | ΔMw (%) |
| 11 | 0 | 0 | 0.87 | 0 | 26971 | - | 23292 | - |
| | | | | 2 | 27940 | 3.6 | 22421 | -3.7 |
| | | | | 4 | 26708 | 2.7 | 20769 | -10.8 |
| | | | | 6 | 28158 | 6.4 | 18652 | -19.9 |
| 12 | 0.15 By Concentrate A | 0 | -0.22 | 0 | 26495 | - | 21852 | - |
| | | | | 2 | 24118 | -8.9 | 16423 | -24.8 |
| | | | | 4 | 21929 | -14.1 | 10948 | -49.9 |
| | | | | 6 | 23437 | -9.8 | 9614 | -56.0 |
| 13 | 0.15 By Concentrate A | 0.33 By Concentrate B | -0.01 | 0 | 27238 | - | 20521 | - |
| | | | | 2 | 27281 | 0.2 | 17424 | -15.1 |
| | | | | 4 | 26001 | -1.0 | 14267 | -30.5 |
| | | | | 6 | 28498 | 6.6 | 12687 | -38.2 |
| 14 | 0.15 By Concentrate C | 0.33 By Concentrate C | -0.19 | 0 | 28128 | - | 21558 | - |
| | | | | 2 | 27864 | 0.9 | 18767 | -12.9 |
| | | | | 4 | 26851 | -1.0 | 14757 | -31.5 |
| | | | | 6 | 28680 | 3.9 | 13922 | -35.4 |

### Examples 15-17

These examples illustrate that adding the phosphite catalyst quencher and HALS to blends via separate concentrates may be preferred for better blend color. Blends of polyester B and polycarbonate B (70:30 ratio by weight) were melt blended along with combinations of Weston 619 (General Electric Specialty Chemicals) and Tinuvin 770 (A HALS supplied by from Ciba Specialty Chemicals). Tinuvin 770 is believed to have a formula consistent with formula (9) wherein R₄ = R₅ = R₆ = R₇ = methyl; R₈ = hydrogen; Y₂-L₁-Y₂- is -OC(O)-(CH₂)₈-(O)CO-. The additives were precompounded with polyester B using a 30-mm WP twin-screw extruder at 250°C, 250 RPM at a rate of 40 lbs/hr to produce the following concentrates: Concentrate D consisting of 95/5 polyester B/Weston 619, Concentrate E consisting of 95/5 polyester B/Tinuvin 770, and Concentrate F consisting of 91.7/5/3.3 polyester B/Weston 619/Tinuvin 770. The blends were prepared as 100-mil thick injection molded plaques using a Toyo Ti-90G2 molding machine at 275°C. The color for the plaques with various combinations of the Weston 619 and the Tinuvin 770 are given in Table 4. The examples show the improved color (i.e. lower b*) for blends with increasing phosphite concentration. The examples show that using separate concentrates for the phosphite and the HALS is preferred for better color (i.e. less yellow represented by lower b*). The same effect is observed in Examples 13 and 14 although the measured difference is smaller because the films are much thinner. These examples are consistent with the literature cited previously that hydrolysis of phosphorus-containing catalyst quenchers is a prerequisite for effective catalyst deactivation and consequently improving blend color during melt blending. It is believed that combining the HALS and phosphite in the same concentrate reduces hydrolysis of the phosphite making it less effective for deactivating the catalyst and improving blend color.

**TABLE 4**

| Example | Concentrate Reference | Weston 619 (wt%) | Tinuvin 770 (wt%) | CIE Color b* |
|---|---|---|---|---|
| 15 | Weston 619 Only from Concentrate D | 0 | None | 4.32 ± 0.084 |
| | | 0.05 | | 1.42 ± 0.084 |
| | | 0.15 | | 0.70 ± 0.071 |
| | | 0.25 | | 0.54 ± 0.055 |
| 16 | Weston 619 via Concentrate D and Tinuvin 770 via Concentrate E | 0 | 0 | 4.32 ± 0.084 |
| | | 0.05 | 0.033 | 1.50 ± 0.100 |
| | | 0.15 | 0.099 | 0.86 ± 0.055 |
| | | 0.25 | 0.165 | 0.84 ± 0.055 |
| 17 | Weston 619 and Tinuvin 770 via Concentrate F | 0 | 0 | 4.32 ± 0.084 |
| | | 0.15 | 0.099 | 2.14 ± 0.055 |
| | | 0.25 | 0.165 | 1.82 ± 0.045 |
| | | 0.5 | 0.33 | 2.08 ± 0.110 |

### Examples 18-19: Improved Weatherability

These examples illustrate the synergistic improvement in weathering for polycarbonate-polyester blends containing both a phosphite catalyst quencher and a HALS. Blends of polyester B and polycarbonate B (70:30 blend ratio by weight) were melt blended along with combinations of Weston 619 (a phosphite supplied by General Electric Specialty Chemicals), Cyasorb UV-3529 (a HALS supplied by Cytec Industries, Inc.), and an ultraviolet light absorber tradename Tinuvin 1577 from Ciba Specialty Chemicals. The additives were precompounded with polyester B using a 30-mm WP twin-screw extruder at 250°C, 250 RPM at a rate of 40 Ibs/hr to produce concentrates. The blends were prepared as sheet consisting of a core layer and two coextruded cap layers. The core layer of the sheet was approximately 114 mils thick and consisted of 3:1 ratio by weight polyester B:polycarbonate B and 0.15% Weston 619. The core layer was extruded using a 2.5-inch MPM extruder at 240°C and 30 RPM. The cap layers were each 3 mils thick coextruded onto each surface of the core layer and consisted of 70:30 ratio by weight polyester B:polycarbonate B and the additive concentrations described below. The cap layers were extruded using a 1.25-inch Killion extruder at 240°C and 30 RPM. The sheet samples were tested for weatherability by exposure in a Weather-Ometer as described previously. The samples were periodically tested for changes in color, haze, and impact strength as described previously. The results are shown in Table 5. The composition that includes the HALS (Example 19) exhibits significantly better retention of color (i.e. less yellowing represented by less increase in b*), light transmission (i.e. lower haze) and impact strength compared to the composition with phosphite and ultraviolet light absorber (Example 18) demonstrating improved weatherability.

**TABLE 5**

| Example | Additive Concentrations In Cap Layer (wt%) | UV Exposure (kJ/m²/nm) | Change in b* | Change in Haze | Change in Impact Strength (%) |
|---|---|---|---|---|---|
| 18 | 0.15% Weston 619 2.5% Tinuvin 1577 | 1000 | 1.08 | 2.7 | -93.2 |
| | | 2000 | 1.71 | 5.9 | -97.5 |
| | | 3000 | 1.55 | 9.1 | -99.0 |
| 19 | 0.15% Weston 619 0.5% Cyasorb 3529 2.5% Tinuvin 1577 | 1000 | 0.88 | 0.9 | -1.7 |
| | | 2000 | 1.13 | 1.4 | -3.1 |
| | | 3000 | 1.24 | 2.0 | -3.9 |

## Claims

1. A polymer blend comprising a mixture of:
(A) at least one polyester prepared by the reaction of at least one diol with at least one dicarboxylic acid or dialkyl ester thereof in the presence of a metallic catalyst;
(B) at least one phosphorus-containing compound;
(C) at least one hindered amine light stabilizer, and
(D) at least one polycarbonate,
wherein the phosphorus-containing compound is selected from the formulas: 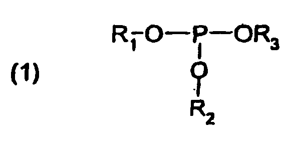 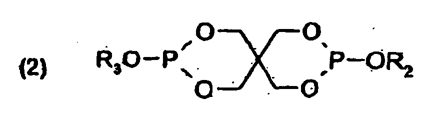 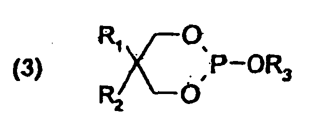 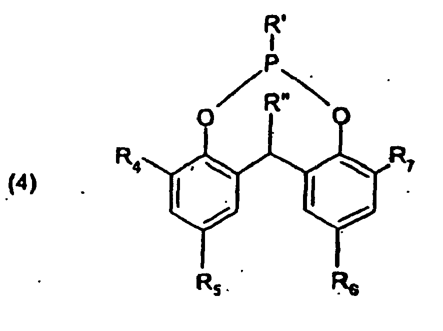 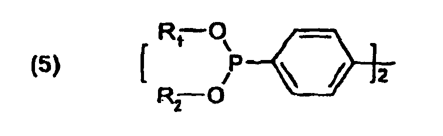 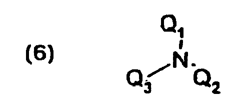 wherein
R₁, R₂ and R₃ are independently selected from C₁-C₂₂-alkyl, substituted C₁-C₂₂-alkyl, C₃-C₈-cycloalkyl, substituted C₃-C₈-cycloalkyl, and heteroaryl;
R' is selected from halogen and OR₁:
R". R₄, R₅, R₆, and R₇ are independently selected from hydrogen. C₁-C₂₂-alkyl, substituted C₁-C₂₂-arkyl, C₃-C₈-cycloalkyl, substituted C₃-C₈-cycloalkyl, heteroaryl, and aryl;
each Q₁, Q₂ and Q₃ group independently is radical A, wherein radical A has the following structure:

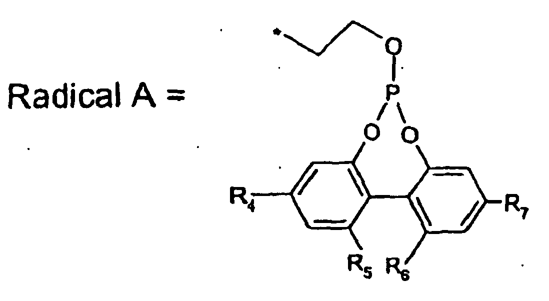

2. The polymer blend according to Claim 1 wherein the at least one polyester comprises:
(1) diacid residues comprising at least 50 mole percent terephthalic acid residues, cyclohexanedicarboxylic acid residues or a mixture thereof, and
(2) diol residues comprising at least 50 mole percent of ethylene glycol residues, cyclohexanedimethanol residues, or a mixture thereof;
wherein the total of the diacid residues is equal to 100 mole percent and the total of the diol residues also is equal to 100 mole percent.

3. The polymer blend according to Claim 2 wherein the polyester comprises up to 200 ppmw Ti, Co and/or Mn residues.

4. A polymer blend comprising:
(A) at least one polyester comprising:
(1) diacid residues comprising at least 50 mole percent of residue of a diacid selected from 1,4-cyclohexanedicarboxylic acid, terephthalic acid and isophthalic acid or a mixture thereof; and
(2) diol residues comprising at least 50 mole percent of ethylene glycol residues, cyclohexanedimethanol residues, or a mixture thereof; based on a total of 100 mole percent of diacid residues and a total of 100 mole percent of diol residues;
(B) 0.01 to 0.5 weight percent of at least one phosphorus-containing compound based on the total weight of the blend;
(C) 0.01 to 1.0 weight percent of at least one hindered amine light stabilizer based on the total weight of the blend, wherein the at least one hindered amine light stabilizer is selected from the following formulae: 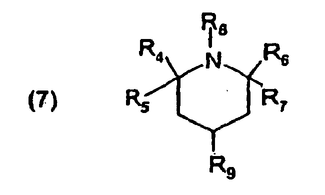 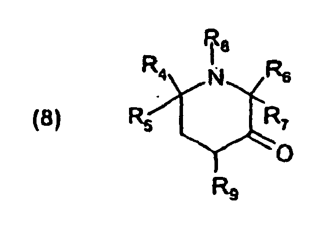 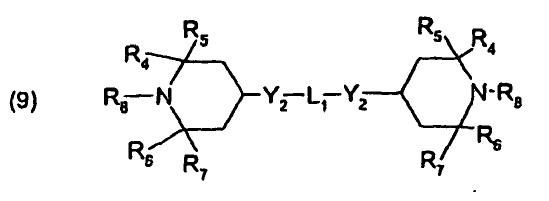 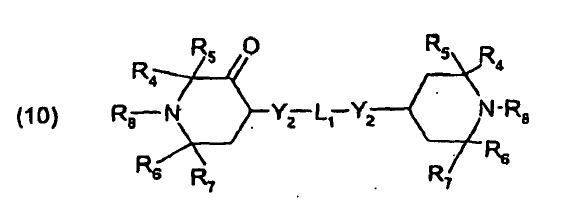 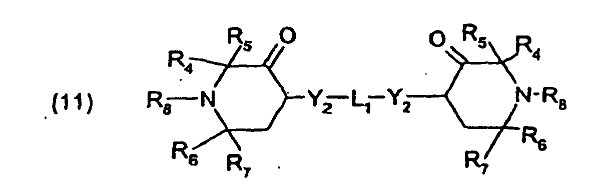 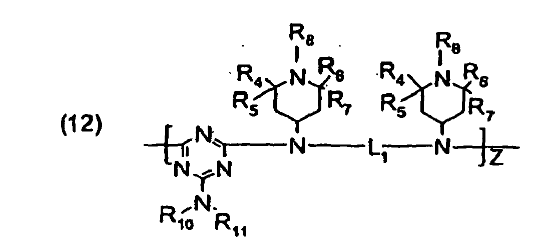 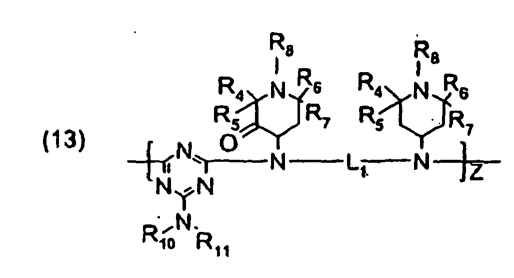 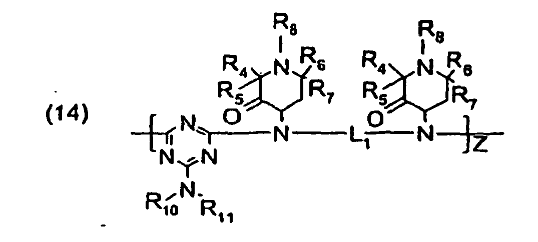 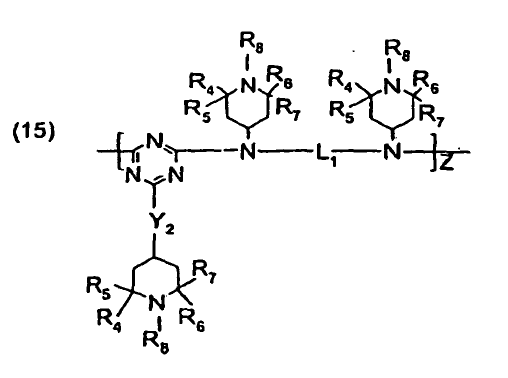 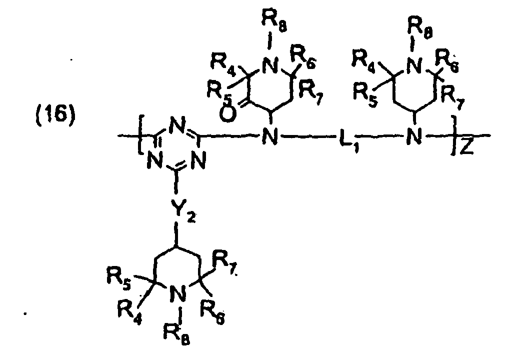 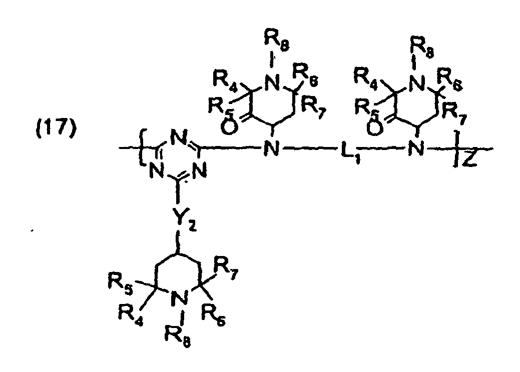 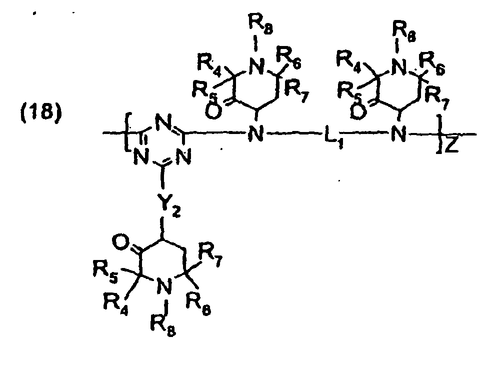 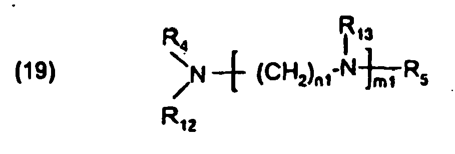 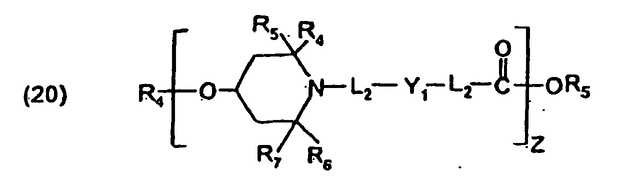 wherein
R₄, R₅, R₆, and R₇ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
R₈ is selected from hydrogen, -OR₆, C₁-C₂₂-alkyl, substituted C₁-C₂₂-alkyl, C₃-C₈-cycloalkyl, and substituted C₃-C₈-cycloalkyl;
R₉ is selected from hydrogen, C₁-C₂₂alkyl, substituted C₁-C₂₂-alkyl, C₃-C₈-cycloalkyl, substituted C₃-C₈-cycloalkyl, heteroaryl, aryl, -Y₁-R₄, and a succinimido group having the formula: 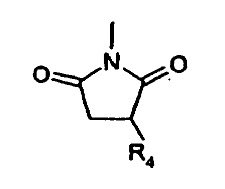 R₁₀ and R₁₁ are independently selected from hydrogen, C₁-C₂₂-alkyl substituted C₁-C₂₂-alkyl, C₃-C₈-cycloalkyl, and substituted C₃-C₈-cycloalkyl; R₁₀ and R₁₁ collectively may represent a divalent group forming a ring with the nitrogen atom to which they are attached;
L₁ is a divalent linking group selected from C₂-C₂₂-alkylene, -(CH₂CH₂-Y₁)₁₋₃-CH₂CH₂-, C₃-C₈-cycloalkylene, arylene, and -CO-L₂-OC-;
L₂ is selected from C₁-C₂₂-alkylene, arylene, -(CH₂CH₂-Y₁)₁₋₃-CH₂CH₂-, and C₃-C₈-cycloalkylene;
Y₁ is selected from -OC(O)-, -NHC(O)-, -O-, -S-, and -N(R₄)-;
Y₂ is selected from -O- and -N(R₄)-;
Z is a positive integer of up to 20;
m1 is selected from 0 to 10;
n1 is a positive integer selected from 2 to 12;
R₁₂ and R₁₃ are independently selected from hydrogen, C₁-C₂₂-alkyl, substituted C₁-C₂₂-alkyl, heteroaryl, aryl, and radical B wherein radical
B is selected from the following structures: 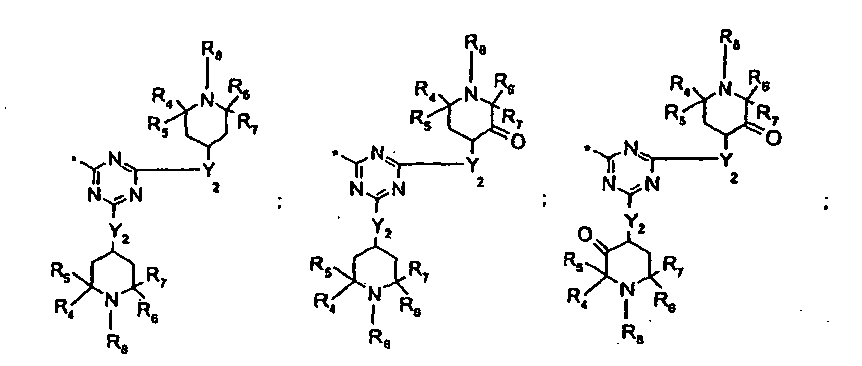 wherein * designates the position of attachment and wherein at least one of R₁₂ and R₁₃ is radical B; and
(D) at least one polycarbonate,
wherein the phosphorus-containing compound is selected from the formulas: 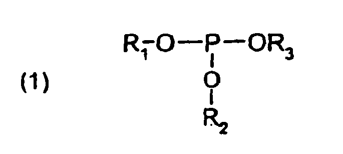 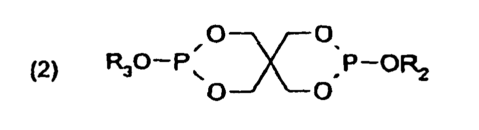 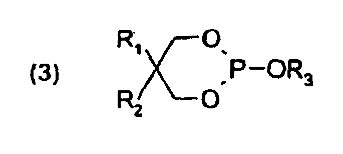 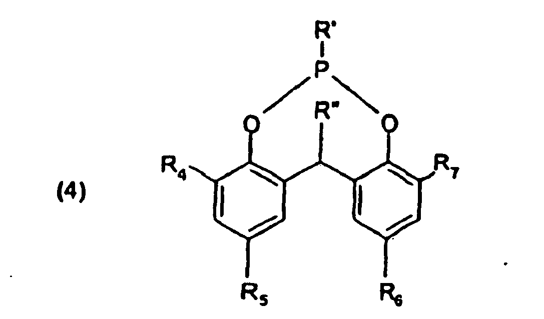 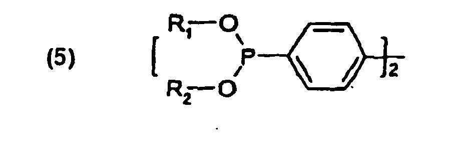 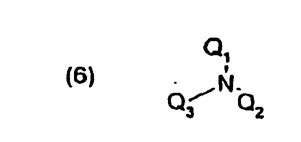 wherein
R₁, R₂ and R₃ are independently selected from C₁-C₂₂-alkyl, substituted C₁-C₂₂-alkyl, C₃-C₈-cycloalkyl, substituted C₃-C₈-cycloalkyl, and heteroaryl;
R' is selected from halogen and OR₁;
R", R₄, R₅R₆, and R₇ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
each Q₁, Q₂ and Q₃ group independently is radical A, wherein radical A has the following structure:

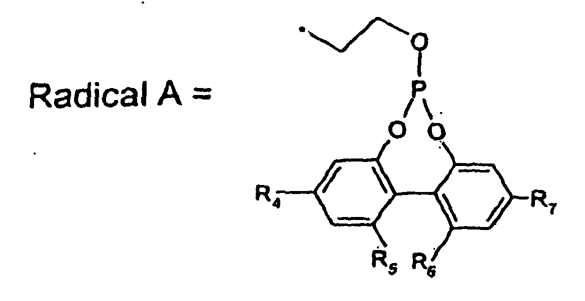

5. The polymer blend of Claim 4 wherein R₈ is hydrogen or alkyl.

6. The polymer blend of Claim 5 wherein the polyester of component (A) has an inherent viscosity of 0.4 to 1.2 dL/g measured at 25°C in a 60/40 ratio by weight of phenol/tetrachloroethane and comprises:
(1) diacid residues comprising 80 to 100 mole percent terephthalic acid residues and 0 to 20 mole percent Isophthalic acid residues; and
(2) diol residues comprising 40 to 100 mole percent 1,4-cyclohexanedimethanol residues and 0 to 60 mole percent ethylene glycol residues and component (B) comprises 0.05 to 0.5 weight percent of at least one phosphorus-containing compound and (C) comprises 0.05 to 1.0 weight percent of at least one hindered amine light stabilizer based on the total weight of the composition.

7. The polymer blend of Claim 6 wherein the polyester of component (A) has an inherent viscosity of 0.4 to 0.8 dUg measured at 25°C in a 60/40 ratio by weight of phenol/tetrachloroethane and comprises:
(1) diacid residues comprising 80 to 100 mole percent terephthalic acid residues and 0 to 20 mole percent isophthalic acid residues; and
(2) diol residues comprising 55 to 80 mole percent 1,4-cyclohexane-dimethanol residues and 20 to 45 mole percent ethylene glycol residues.

8. The polymer blend of Claim 4 wherein the polyester of component (A) has an inherent viscosity of 0.4 to 0.8 dUg measured at 25°C in a 60/40 ratio by weight of phenol/tetrachloroethane and comprises:
(1) diacid residues comprising 65 to 83 mole percent terephthalic acid residues and 35 to 17 mole percent isophthalic acid residues; and
(2) diol residues comprising 80 to 100 mole percent 1,4-cyclohexanedimethanol residues and 0 to 20 mole percent ethylene glycol residues.

9. The polymer blend of Claim 8 wherein the polyester of component (A) comprises:
(1) diacid residues comprising 70 to 80 mole percent terephthalic acid residues and 30 to 20 mole percent isophthalic acid residues; and
(2) diol residues comprising 90 to 100 mole percent 1,4-cyclohexanedimethanol residues and 0 to 10 mole percent ethylene glycol residues.

10. The polymer blend of Claim 4 wherein the polyester of component (A) has an inherent viscosity of 0.4 to 1.2 dL/g measured at 25°C in a 60/40 ratio by weight of phenol/tetrachloroethane and comprises:
(1) diacid residues comprising at least 80 mole percent 1,4-cyclohexanedicarboxylic acid residues; and
(2) diol residues comprising at least 80 mole percent 1,4-cyclohexanedimethanol residues.

11. The polymer blend of Claim 10 wherein the polyester of component (A) comprises:
(1) diacid residues comprising 90 to 100 mole percent 1,4-cyclohexanedicarboxylic add residues;
(2) diol residues comprising 90 to 100 mole percent 1,4-cyclohexanedimethanol residues.

12. The polymer blend of Claim 11 wherein the polyester of component (A) comprises:
(1) diacid residues comprising 100 mole percent 1,4-cyclohexanedicarboxylic acid residues;
(2) diol residues comprising 100 mole percent 1,4-cyclohexanedimethanol residues.

13. A polymer blend comprising a mixture of the following:
(A) at least one polyester having an inherent viscosity of 0.4 to 1.2 dL/g measured at 25°C in a 60/40 ratio by weight of phenol/tetrachloroethane and comprises:
(1) diacid residues comprising at least 50 mole percent of residue of a diacid selected from 1,4-cyclohexanedicarboxylic acid, terephthalic acid and isophthalic acid or a mixture thereof: and
(2) diol residues comprising at least 50 mole percent ethylene glycol, cyclohexanedimethanol residues, or a mixture thereof;
(B) 0.1 to 0.5 weight percent of at least one phosphorus-containing compound based on the total weight of the composition;
(C) 0.1 to 1.0 weight percent of at least one hindered amine light stabilizer based on the total weight of the composition having the formulas: 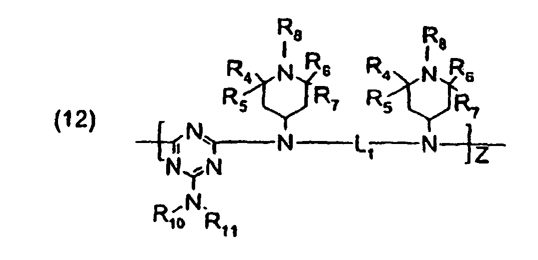 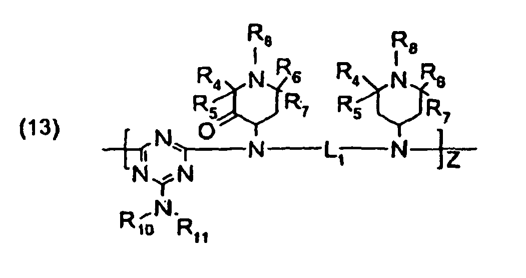 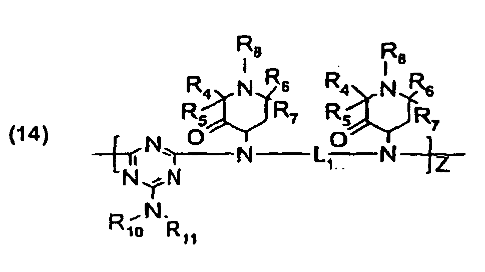 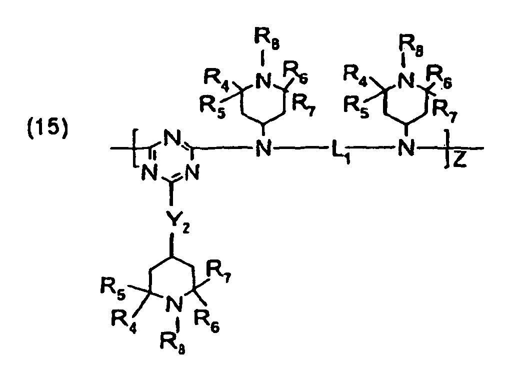 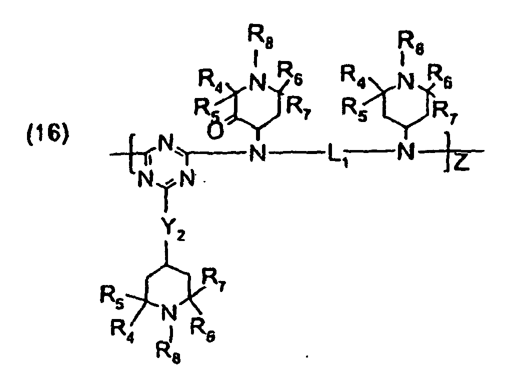 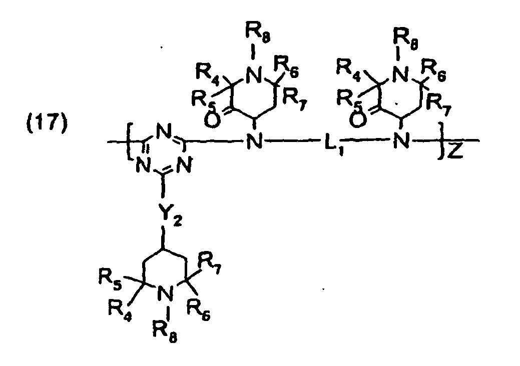 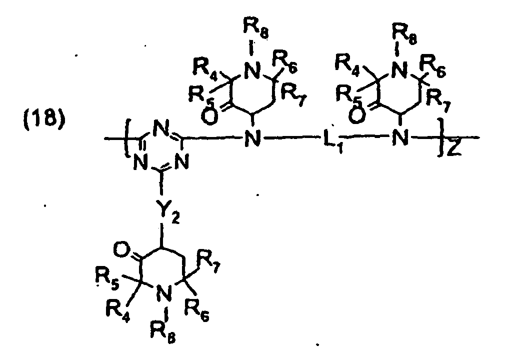 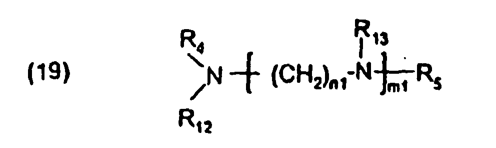 wherein
R₄, R₅, R₆, and R₇ are independently selected from hydrogen. C₁-C₂₂-alkyl, substituted C₁-C₂₂-alkyl, C₃-C₈-cycloalkyl, substituted C₃-C₈-cycloalkyl, heteroaryl, and aryl;
R₈ is selected from hydrogen, -OR₆, C₁-C₂₂-alkyl, substituted C₁-C₂₂-alkyl, C₃-C₈-cycloalkyl, and substituted C₃-C₈-cycloalkyl;
R₁₀ and R₁₁ are independently selected from hydrogen, C₁-C₂₂-alkyl substituted C₁-C₂₂-alkyl, C₃-C₈-cycloalkyl, and substituted C₃-C₈-cycloalkyl; R,o and R₁₁ collectively may represent a divalent group forming a ring with the nitrogen atom to which they are attached;
L₁ is a divalent linking group selected from C₂-C₂₂-alkylene, -(CH₂CH₂-Y₁₎₁₋₃-CH₂CH₂-, C₃-C₈-cycloalkylene, arylene, and -CO-L₂-OC-;
Y₂ is selected from -O- and -N(R₄)-:
Z is a positive integer of up to 20;
m1 is selected from 0 to 10;
n1 is a positive integer selected from 2 to 12;
R₁₂ and R₁₃ are independently selected from hydrogen, C₁-C₂₂-alkyl, substituted C₁-C₂₂-alkyl, heteroaryl, aryl, and radical B wherein radical B is selected from the following structures: 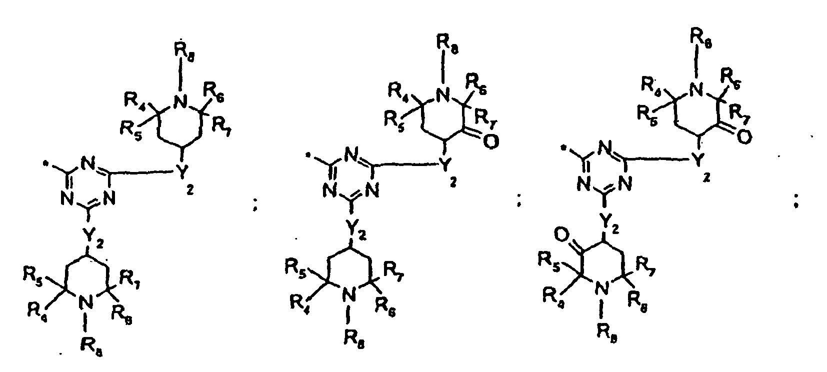 wherein * designates the position of attachment and wherein at least one of R₁₂ and R₁₃ is radical B; and
(D) at least one polycarbonate,
wherein the phosphorus-containing compound is selected from the formulas: 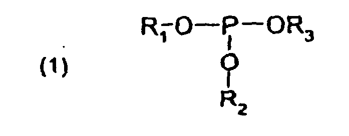 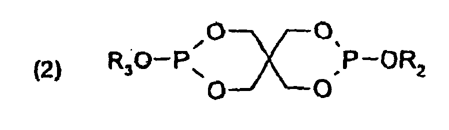 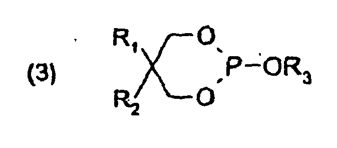 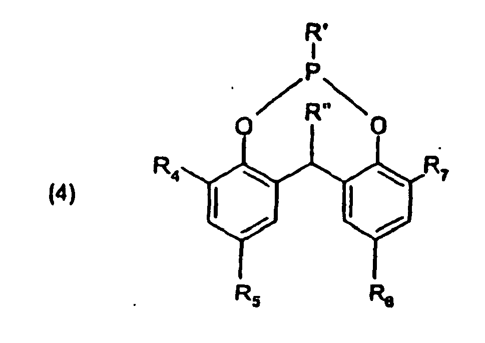 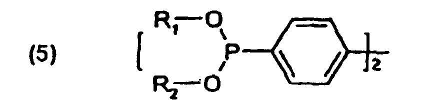 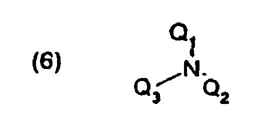 wherein
R₁, R₂ and R₃ are independently selected from C₁-C₂₂-alkyl, substituted C₁-C₂₂-alkyl, C₃-C₈-cycloalkyl, substituted C₃-C₈-cycloalkyl, and heteroaryl;
R' is selected from halogen and OR₁;
R", R₄, R₅, R₆. and R₇ are independently selected from hydrogen. C,-C₂₂-alkyl, substituted C₁-C₂₂-alkyl, C₃-C₈-cycloalkyl, substituted C₃-C₈-cycloalkyl, heteroaryl, and aryl;
each Q₁, Q₂ and Q₃ group independently is radical A. wherein radical A has the following structure:

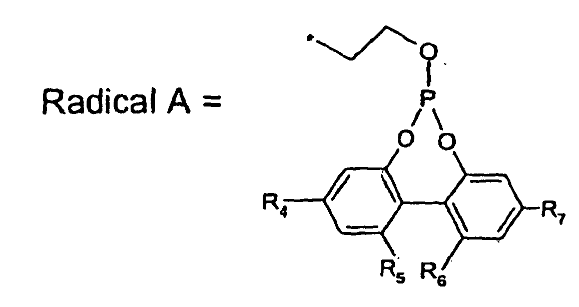

14. The polymer blend of Claim 13 wherein R₈ is hydrogen or alkyl for the hindered amine light stabilizer.

15. The polymer blend of Claim 13 wherein the at least one hindered amine light stabilizer contains an sp³ -hybridized nitrogen atom that is not contained within the substituted piperidine ring.

16. The polymer blend of Claim 13 wherein the at least one hindered amine light stabilizer has a weight average molecular weight of greater than 1000.

17. The polymer blend of Claim 13 wherein the phosphorus-containing compound is selected from the group consisting of distearyl pentaerythritol diphosphite, and bis-(2,4-dicumylphenyl) pentaerythritol diphosphite.

18. The polymer blend of Claim 17 wherein said phosphorus-containing compound is distearyl pentaerythritol diphosphite.

19. The polymer blend of Claim 17 comprising from about 0.15 to 0.35 weight percent of the phosphorus-containing compounds and from 0.1 to 0.75 weight percent of the hindered amine light stabilizer, based on the total weight of the polymer blend.

20. The polymer blend of Claim 13 wherein the polyester of component (A) has an inherent viscosity of 0.4 to 0.8 dL/g measured at 25°C in a 60/40 ratio by weight of phenol/tetrachloroethane and comprises:
(1) diacid residues comprising 80 to 100 mole percent terephthalic acid residues and 0 to 20 mole percent isophthalic acid residues; and
(2) diol residues comprising 40 to 100 mole percent 1,4-cyclohexanedimethanol residues and 0 to about 60 mole percent ethylene glycol residues.

21. The polymer blend of Claim 13 wherein the polyester of component (A) has an inherent viscosity of 0.4 to 0.8 dUg measured at 25°C in a 60/40 ratio by weight of phenol/tetrachloroethane and comprises:
(1) diacid residues comprising about 80 to 100 mole percent terephthalic acid residues and 0 to 20 mole percent isophthalic acid residues; and
(2) diol residues comprising 55 to 80 mole percent 1,4-cyclohexane-dimethanol residues and 20 to about 45 mole percent ethylene glycol residues.

22. The polymer blend of Claim 13 wherein the polyester of component (A) has an inherent viscosity of 0.4 to 0.8 dUg measured at 25°C in a 60/40 ratio by weight of phenol/tetrachloroethane and comprises:
(1) diacid residues comprising 65 to 83 mole percent terephthalic acid residues and 35 to 17 mole percent isophthalic acid residues; and
(2) diol residues comprising 80 to 100 mole percent 1,4-cyclohexanedimethanol residues and 0 to 20 mole percent ethylene glycol residues

23. The polymer blend of Claim 22 wherein the polyester of component (A) comprises:
(1) diacid residues comprising 70 to 80 mole percent terephthalic acid residues and 30 to 20 mole percent isophthalic acid residues; and
(2) diol residues comprising 90 to 100 mole percent 1,4-cyclohexanedimethanol residues and 0 to 10 mole percent ethylene glycol residues

24. The polymer blend of Claim 13 wherein the polyester of component (A) has an inherent viscosity of 0.4 to 1.2 dL/g measured at 25°C in a 60/40 ratio by weight of phenol/tetrachloroethane and comprises:
(1) diacid residues comprising at least 80 mole percent 1,4-cyclohexanedicarboxylic acid residues; and
(2) diol residues comprising at least 80 mole percent 1,4-cyclohexane-dimethanol residues.

25. The polymer blend of Claim 24 wherein the polyester of component (A) comprises:
(1) diacid residues comprising 90 to 100 mole percent 1,4-cyclohexanedicarboxylic acid residues;
(2) diol residues comprising 90 to 100 mole percent 1,4-cyclohexanedimethanol residues.

26. The polymer blend of Claim 25 wherein the polyester of component (A) comprises:
(1) diacid residues comprising 100 mole percent 1,4-cyclohexanedicarboxylic acid residues;
(2) diol residues comprising 100 mole percent 1,4-cyclohexanedimethanol residues.

27. A polymer blend comprising a mixture of:
(A) at least one polyester having an inherent viscosity of 0.4 to 1.2 dL/g measured at 25°C in a 60/40 ratio by weight of phenol/tetrachloroethane and comprises:
(1) diacid residues comprising at least 50 mole percent terephthalic acid residues, cyclohexanedicarboxylic acid residues or a mixture thereof; and
(2) diol residues comprising at least 50 mole percent ethylene glycol, cyclohexanedimethanol residues, or a mixture thereof; wherein the total mole percentages of diacid residues is 100 mole percent and the total mole percentages of diol residues is 100 mole percent; and
(B) 0.1 to 0.5 weight percent of at least one phosphorus-containing compound selected from the group of bis(2,4-di-t-butylphenyl)pentaerythritol diphosphite, distearyl pentaerythritol diphosphite, and bis-(2,4-dicurnytphenyl) pentaerythritol diphosphite, based on the total weight of the blend;
(C) 0.1 to 1.0 weight percent of at least one hindered amine light stabilizer based on the total weight of the composition having the formula: 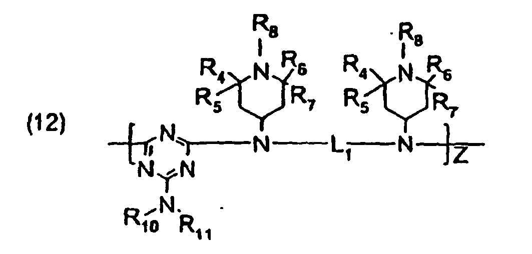 wherein R₄= R₅= R₆= R₇= R₆=methyl. (R₁₀)(R₁₁)N- collectively represent morpholino. L₁ is C₁ to C₆ alkylene, and Z is 1 to 6; and
(D) at least one polycarbonate.

28. The polymer blend of Claim 27 comprising from 0.15 to 0.35 weight percent of the phosphorus-containing compounds and from 0.1 to 0.75 weight percent of the hindered amine light stabilizer, based on the total weight of the polymer blend.

29. The polymer blend according to Claim 27 wherein the polyester of component (A) comprises:
(1) diacid residues comprising 80 to 100 mole percent terephthalic acid residues, 0 to 20 mole percent isophthalic acid residues; and
(2) diol residues comprising 55 to 80 mole percent of 1.4-cyclohexanedimethanol residues and 20 to 45 mole percent of ethylene glycol residues;
wherein the total of the diacid residues is equal to 100 mole percent and the total of the diol residues also is equal to 100 mole percent.

30. The polymer blend according to Claim 27 wherein the polyester of component (A) comprises:
(1) diacid residues comprising 70 to 80 mole percent terephthalic acid residues, 30 to 20 mole percent isophthalic acid residues; and
(2) diol residues comprising 90 to 100 mole percent of 1,4-cyclohexanedimethanol residues and 0 to 10 mole percent of ethylene glycol residues;
wherein the total of the diacid residues is equal to 100 mole percent and the total of the diol residues also is equal to 100 mole percent.

31. The polymer blend according to Claim 27 wherein the polyester- of component (A) comprises:
(1) diacid residues comprising at least 90 mole percent 1,4-cyclohexanedicarboxylic acid residues: and
(2) diol residues comprising at least 90 mole percent 1,4-cyclohexanedimethanol residues;
wherein the total of the diacid residues is equal to 100 mole percent and the total of the diol residues also is equal to 100 mole percent.

32. The polymer blend of Claim 27 wherein said phosphorus-containing compound is distearyl pentaerythritol diphosphite.

33. The polymer blend of claim 1 wherein the polycarbonate is derived from bisphenol A.

34. The polymer blend of claim 4 wherein the polycarbonate is derived from bisphenol A:

35. The polymer blend of claim 13 wherein the polycarbonate is derived from bisphenol A.

36. The polymer blend of claim 27 wherein the polycarbonate is derived from bisphenol A.

37. The polymer blend according to claim 1, wherein the at least one hindered amine light stabilizer compound is 1,3,5-triazine-2,4,6-triamine, N,N"'-[1,2-ethanediyl-bis[[[4,6-bis[butyl(1,2,2,6,6-pentamethyl-4-piperidinyl)amino]-1,3,5-triazine-2-yl]imino]-3,1-propanediyl]]]-bis[N,N"-dibutyl-N,N''-bis(1,2,2,6,6-pentamethyl-4-piperidinyl)-.

38. The polymer blend according to anyone of the preceding claims obtainable by adding the phosphorus-containing compound (B) and the hindered amine light stabilizer (C) to the blend via separate concentrates.

39. A process for preparing the polymer blend according to anyone of the preceding claim, said process comprising adding the phosphorus-containing compound (B) and the hindered amine light stabilizer (C) to the blend via separate concentrates.

## Patentansprüche

1. Polymerblend, umfassend eine Mischung von:
(A) mindestens einem Polyester, der durch die Umsetzung mindestens eines Diols mit mindestens einer Dicarbonsäure oder einem Dialkylester derselben in Anwesenheit eines metallischen Katalysators hergestellt ist;
(B) mindestens einer phosphorhaltigen Verbindung;
(C) mindestens einem gehinderten Amin-Lichtstabilisator; und
(D) mindestens einem Polycarbonat,
wobei die phosphorhaltige Verbindung ausgewählt ist aus den Formeln: 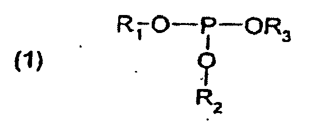 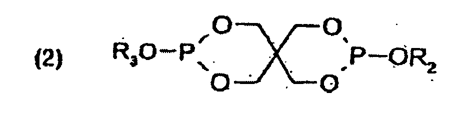 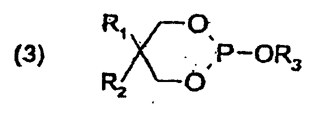 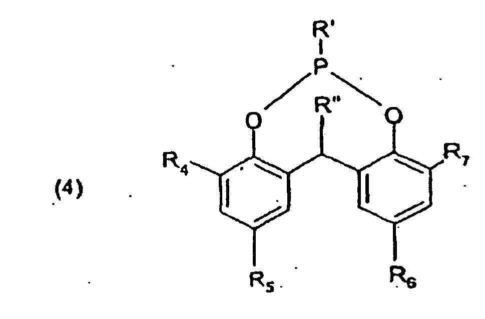 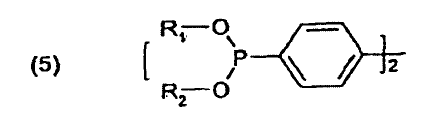 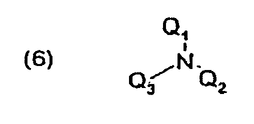 worin
R₁, R₂ und R₃ unabhängig aus (C₁-C₂₂)-Alkyl, substituiertem (C₁-C₂₂)-Alkyl, (C₃-C₈)-Cycloalkyl, substituiertem (C₃-C₈)-Cycloalkyl und Heteroaryl ausgewählt sind;
R' aus Halogen und OR₁ ausgewählt ist;
R", R₄, R₅, R₆ und R₇ unabhängig aus Wasserstoff, (C₁-C₂₂)-Alkyl, substituiertem (C₁-C₂₂)-Alkyl, (C₃-C₈)-Cycloalkyl, substituiertem (C₃-C₈)-Cycloalkyl, Heteroaryl und Aryl ausgewählt sind;
jede Gruppe Q₁, Q₂ und Q₃ unabhängig ein Rest A ist, wobei der Rest A die folgende Struktur aufweist:

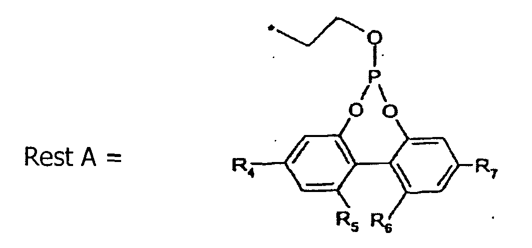

2. Polymerblend nach Anspruch 1, bei dem der mindestens eine Polyester umfasst:
(1) Disäure-Reste, die mindestens 50 Molprozent an Terephthalsäure-Resten, Cyclohexandicarbonsäure-Resten oder einer Mischung derselben umfassen; und
(2) Diol-Reste, die mindestens 50 Molprozent an Ethylenglycol-Resten, Cyclohexandimethanol-Resten oder einer Mischung derselben umfassen;
wobei die Summe der Disäure-Reste gleich 100 Molprozent ist und die Summe der Diol-Reste ebenfalls gleich 100 Molprozent ist.

3. Polymerblend nach Anspruch 2, bei dem der Polyester bis zu 200 ppmw Ti-, Co- und/oder Mn-Reste umfasst.

4. Polymerblend, umfassend:
(A) mindestens einen Polyester, welcher umfasst:
(1) Disäure-Reste, die mindestens 50 Molprozent an Rest einer Disäure umfassen, die aus 1,4-Cyclohexandicarbonsäure, Terephthalsäure und Isophthalsäure oder einer Mischung derselben ausgewählt ist; und
(2) Diol-Reste, die mindestens 50 Molprozent an Ethylenglycol-Resten, Cyclohexandimethanol-Resten oder einer Mischung derselben umfassen; bezogen auf insgesamt 100 Molprozent Disäure-Reste und insgesamt 100 Molprozent Diol-Reste;
(B) 0,01 bis 0,5 Gewichtsprozent mindestens einer phosphorhaltigen Verbindung, bezogen auf das Gesamtgewicht des Blends;
(C) 0,01 bis 1,0 Gewichtsprozent mindestens eines gehinderten Amin-Lichtstabilisators, bezogen auf das Gesamtgewicht des Blends, wobei der mindestens eine gehinderte Amin-Lichtstabilisator aus den folgenden Formeln ausgewählt ist: 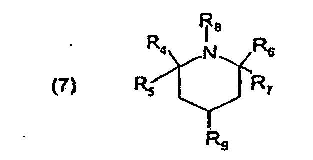 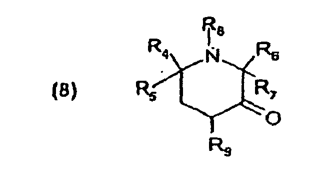 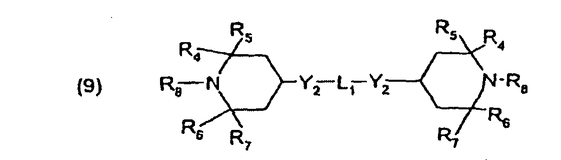 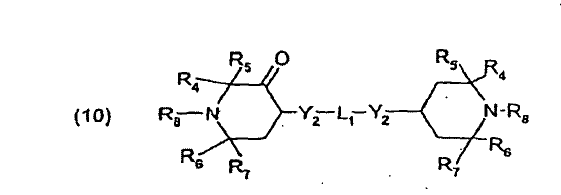 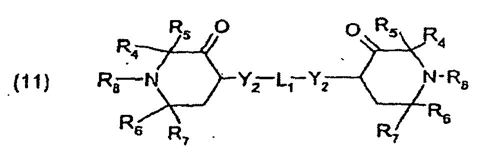 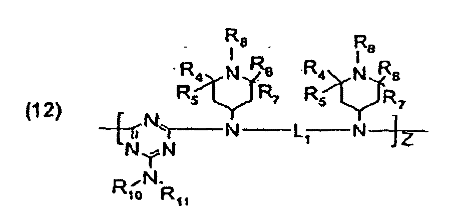 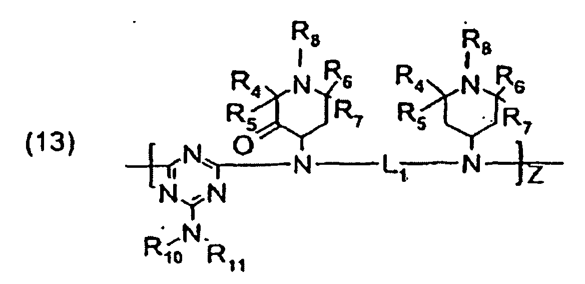 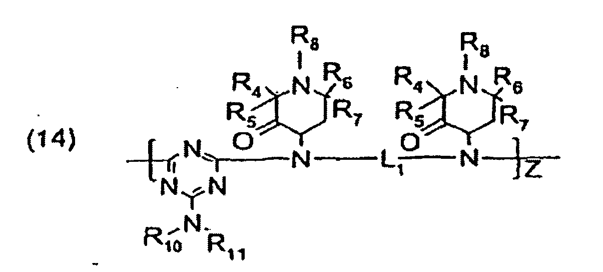 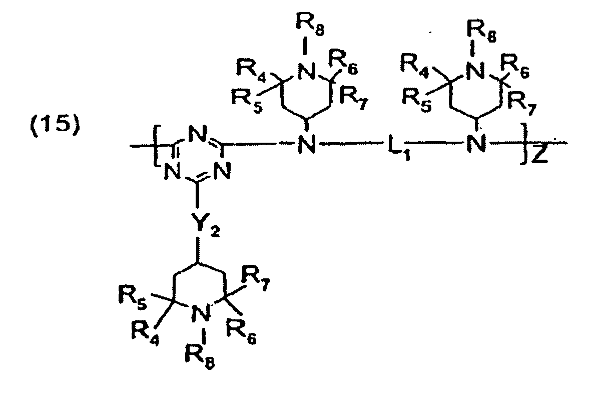 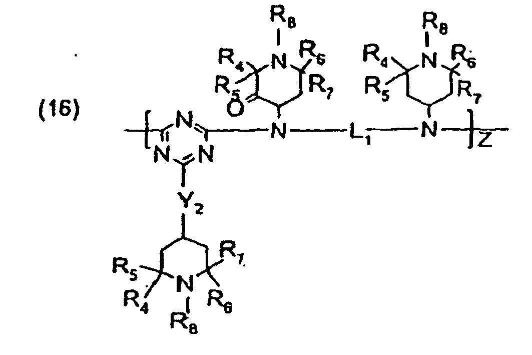 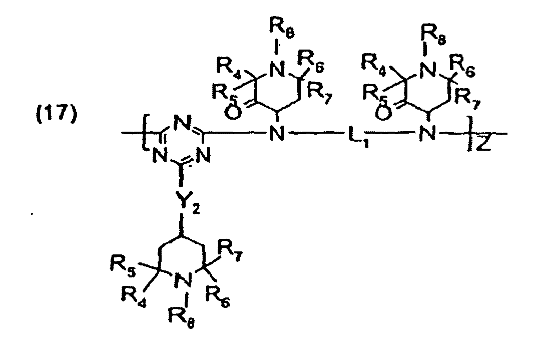 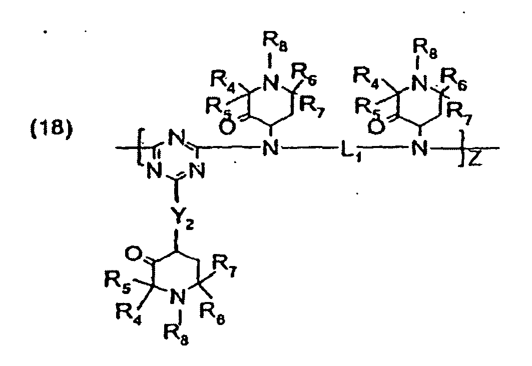 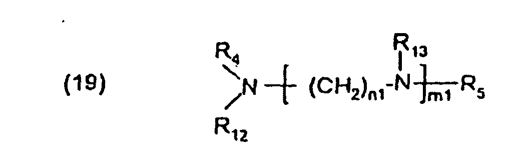 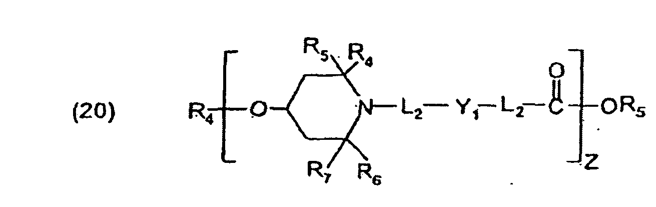 worin
R₄, R₅, R₆ und R₇ unabhängig aus Wasserstoff, (C₁-C₂₂)-Alkyl, substituiertem (C₁-C₂₂)-Alkyl, (C₃-C₈)-Cycloalkyl, substituiertem (C₃-C₈)-Cycloalkyl, Heteroaryl und Aryl ausgewählt sind;
R₈ aus Wasserstoff, -OR₆, (C₁-C₂₂)-Alkyl, substituiertem (C₁-C₂₂)-Alkyl, (C₃-C₈)-Cycloalkyl und substituiertem (C₃-C₈)-Cycloalkyl ausgewählt ist;
R₉ aus Wasserstoff, (C₁-C₂₂)-Alkyl, substituiertem (C₁-C₂₂)-Alkyl, (C₃-C₈)-Cycloalkyl, substituiertem (C₃-C₈)-Cycloalkyl, Heteroaryl, Aryl, -Y₁-R₄ und einer Succinimido-Gruppe mit der Formel: 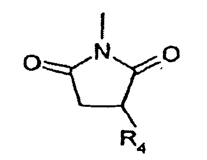 ausgewählt ist;
R₁₀ und R₁₁ unabhängig aus Wasserstoff, (C₁-C₂₂)-Alkyl, substituiertem (C₁-C₂₂)-Alkyl, (C₃-C₈)-Cycloalkyl und substituiertem (C₃-C₈)-Cycloalkyl ausgewählt sind; R₁₀ und R₁₁ zusammen eine zweiwertige Gruppe darstellen können, die mit dem Stickstoffatom, an das sie gebunden sind, einen Ring bildet;
L₁ eine zweiwertige Verknüpfungsgruppe ist, die aus (C₂-C₂₂)-Alkylen, -(CH₂CH₂-Y₁)₁₋₃-CH₂CH₂-, (C₃-C₈)-Cycloalkylen, Arylen und -CO-L₂-OC- ausgewählt ist;
L₂ aus (C₁-C₂₂)-Alkylen, Arylen, -(CH₂CH₂-Y₁)₁₋₃-CH₂CH₂- und (C₃-C₈)-Cycloalkylen ausgewählt ist;
Y₁ aus -OC(O)-, -NHC(O)-, -O-, -S- und -N(R₄)- ausgewählt ist;
Y₂ aus -O- und -N(R₄)- ausgewählt ist;
Z eine positive ganze Zahl von bis zu 20 ist;
m1 aus 0 bis 10 ausgewählt ist;
n1 eine positive ganze Zahl ist, die aus 2 bis 12 ausgewählt ist;
R₁₂ und R₁₃ unabhängig aus Wasserstoff, (C₁-C₂₂)-Alkyl, substituiertem (C₁-C₂₂)-Alkyl, Heteroaryl, Aryl und einem Rest B ausgewählt sind; wobei der Rest B aus den folgenden Strukturen ausgewählt ist: 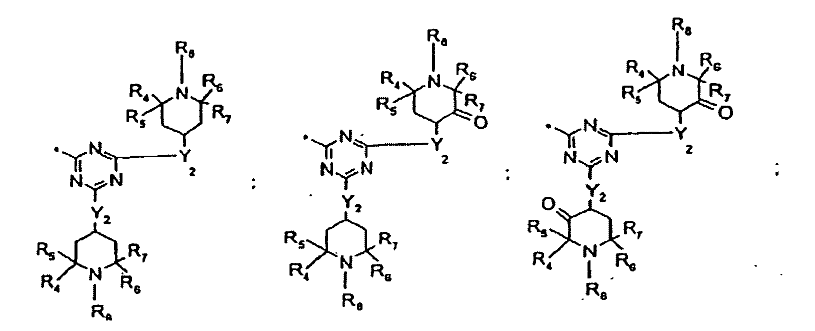 worin * die Position der Verknüpfung bezeichnet und worin mindestens eines von R₁₂ und R₁₃ der Rest B ist; und
(D) mindestens ein Polycarbonat,
wobei die phosphorhaltige Verbindung ausgewählt ist aus den Formeln: 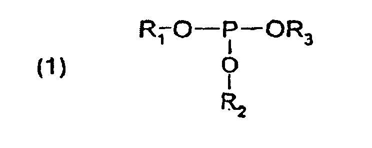 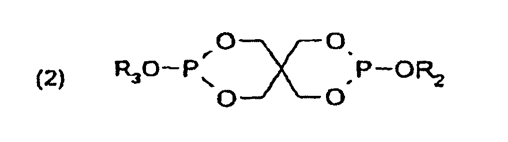 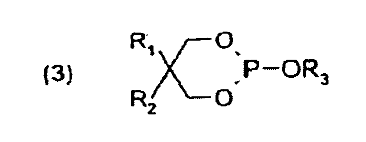 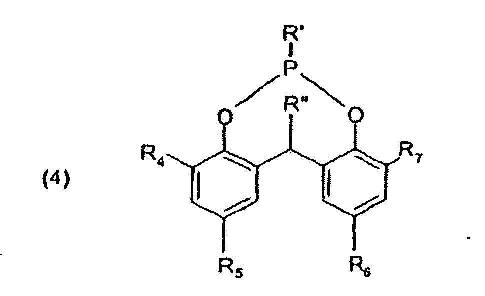 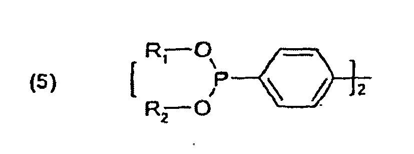 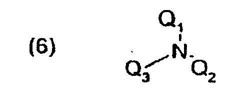 worin
R₁, R₂ und R₃ unabhängig aus (C₁-C₂₂)-Alkyl, substituiertem (C₁-C₂₂)-Alkyl, (C₃-C₈)-Cycloalkyl, substituiertem (C₃-C₈)-Cycloalkyl und Heteroaryl ausgewählt sind;
R' aus Halogen und OR₁ ausgewählt ist;
R", R₄, R₅, R₆ und R₇ unabhängig aus Wasserstoff, (C₁-C₂₂)-Alkyl, substituiertem (C₁-C₂₂)-Alkyl, (C₃-C₈)-Cycloalkyl, substituiertem (C₃-C₈)-Cycloalkyl, Heteroaryl und Aryl ausgewählt sind;
jede Gruppe Q₁, Q₂ und Q₃ unabhängig ein Rest A ist, wobei der Rest A die folgende Struktur aufweist:

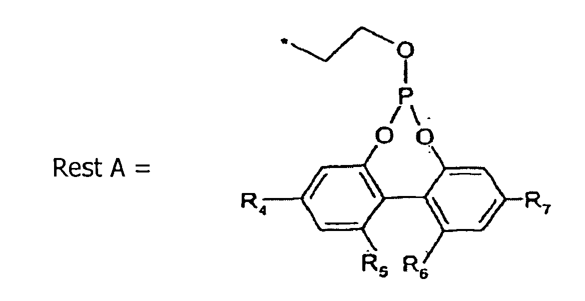

5. Polymerblend nach Anspruch 4, bei dem R₈ Wasserstoff oder Alkyl ist.

6. Polymerblend nach Anspruch 5, bei dem der Polyester der Komponente (A) eine innere Viskosität von 0,4 bis 1,2 dl/g aufweist, gemessen bei 25°C in einem 60/40-Gewichtsverhältnis von Phenol/Tetrachlorethan, und umfasst:
(1) Disäure-Reste, die 80 bis 100 Molprozent Terephthalsäure-Reste und 0 bis 20 Molprozent Isophthalsäure-Reste umfassen; und
(2) Diol-Reste, die 40 bis 100 Molprozent 1,4-Cyclohexandimethanol-Reste und 0 bis 60 Molprozent Ethylenglycol-Reste umfassen, und die Komponente (B) 0,05 bis 0,5 Gewichtsprozent mindestens einer phosphorhaltigen Verbindung umfasst und (C) 0,05 bis 1,0 Gewichtsprozent mindestens eines gehinderten Amin-Lichtstabilisators umfasst, bezogen auf das Gesamtgewicht der Zusammensetzung.

7. Polymerblend nach Anspruch 6, bei dem der Polyester der Komponente (A) eine innere Viskosität von 0,4 bis 0,8 dl/g aufweist, gemessen bei 25°C in einem 60/40-Gewichtsverhältnis von Phenol/Tetrachlorethan, und umfasst:
(1) Disäure-Reste, die 80 bis 100 Molprozent Terephthalsäure-Reste und 0 bis 20 Molprozent Isophthalsäure-Reste umfassen; und
(2) Diol-Reste, die 55 bis 80 Molprozent 1,4-Cyclohexandimethanol-Reste und 20 bis 45 Molprozent Ethylenglycol-Reste umfassen.

8. Polymerblend nach Anspruch 4, bei dem der Polyester der Komponente (A) eine innere Viskosität von 0,4 bis 0,8 dl/g aufweist, gemessen bei 25°C in einem 60/40-Gewichtsverhältnis von Phenol/Tetrachlorethan, und umfasst:
(1) Disäure-Reste, die 65 bis 83 Molprozent Terephthalsäure-Reste und 35 bis 17 Molprozent Isophthalsäure-Reste umfassen; und
(2) Diol-Reste, die 80 bis 100 Molprozent 1,4-Cyclohexandimethanol-Reste und 0 bis 20 Molprozent Ethylenglycol-Reste umfassen.

9. Polymerblend nach Anspruch 8, bei dem der Polyester der Komponente (A) umfasst:
(1) Disäure-Reste, die 70 bis 80 Molprozent Terephthalsäure-Reste und 30 bis 20 Molprozent Isophthalsäure-Reste umfassen; und
(2) Diol-Reste, die 90 bis 100 Molprozent 1,4-Cyclohexandimethanol-Reste und 0 bis 10 Molprozent Ethylenglycol-Reste umfassen.

10. Polymerblend nach Anspruch 4, bei dem der Polyester der Komponente (A) eine innere Viskosität von 0,4 bis 1,2 dl/g aufweist, gemessen bei 25°C in einem 60/40-Gewichtsverhältnis von Phenol/Tetrachlorethan, und umfasst:
(1) Disäure-Reste, die mindestens 80 Molprozent 1,4-Cyclohexandicarbonsäure-Reste umfassen; und
(2) Diol-Reste, die mindestens 80 Molprozent 1,4-Cyclohexandimethanol-Reste umfassen.

11. Polymerblend nach Anspruch 10, bei dem der Polyester der Komponente
(A) umfasst:
(1) Disäure-Reste, die 90 bis 100 Molprozent 1,4-Cyclohexandicarbonsäure-Reste umfassen;
(2) Diol-Reste, die 90 bis 100 Molprozent 1,4-Cyclohexandimethanol-Reste umfassen.

12. Polymerblend nach Anspruch 11, bei der der Polyester der Komponente (A) umfasst:
(1) Disäure-Reste, die 100 Molprozent 1,4-Cyclohexandicarbonsäure-Reste umfassen;
(2) Diol-Reste, die 100 Molprozent 1,4-Cyclohexandimethanol-Reste umfassen.

13. Polymerblend, umfassend eine Mischung von den Folgenden:
(A) mindestens einem Polyester mit einer inneren Viskosität von 0,4 bis 1,2 dl/g, gemessen bei 25°C in einem 60/40-Gewichtsverhältnis von Phenol/Tetrachlorethan, der umfasst:
(1) Disäure-Reste, welche mindestens 50 Molprozent an Rest einer Disäure umfassen, die aus 1,4-Cyclohexandicarbonsäure, Terephthalsäure und Isophthalsäure oder einer Mischung derselben ausgewählt ist; und
(2) Diol-Reste, die mindestens 50 Molprozent an Ethylenglycol-, Cyclohexandimethanol-Resten oder einer Mischung derselben umfassen;
(B) 0,1 bis 0,5 Gewichtsprozent mindestens einer phosphorhaltigen Verbindung, bezogen auf das Gesamtgewicht der Zusammensetzung;
(C) 0,1 bis 1,0 Gewichtsprozent mindestens eines gehinderten Amin-Lichtstabilisators, bezogen auf das Gesamtgewicht der Zusammensetzung, mit den folgenden Formeln: 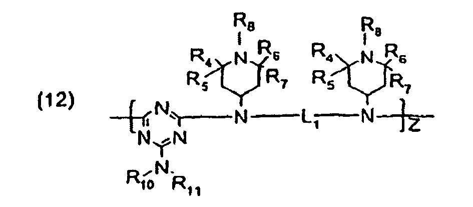 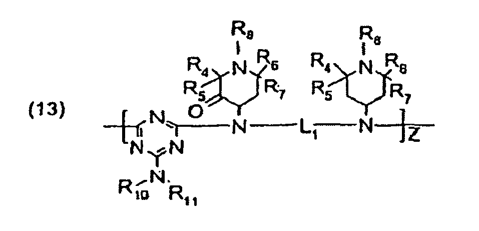 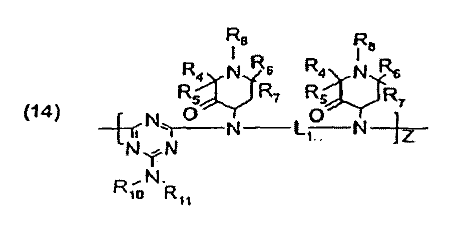 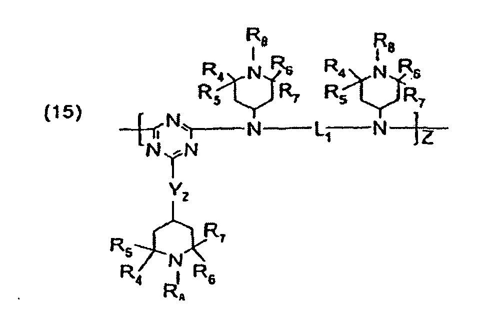 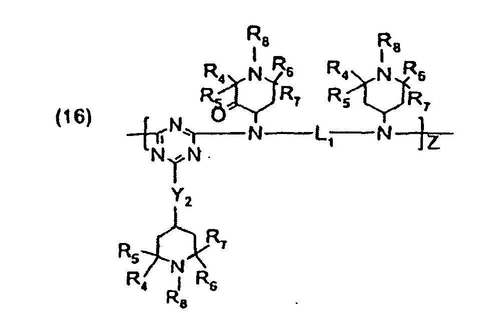 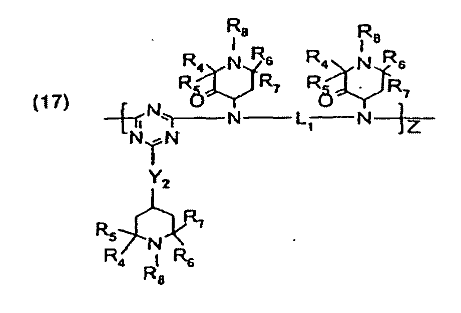 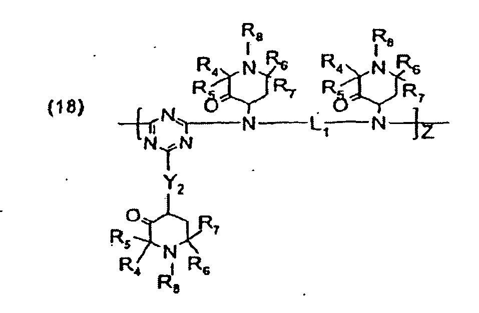 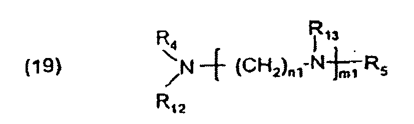 worin
R₄, R₅, R₆ und R₇ unabhängig aus Wasserstoff, (C₁-C₂₂)-Alkyl, substituiertem (C₁-C₂₂)-Alkyl, (C₃-C₈)-Cycloalkyl, substituiertem (C₃-C₈)-Cycloalkyl, Heteroaryl und Aryl ausgewählt sind;
R₈ aus Wasserstoff, -OR₆, (C₁-C₂₂)-Alkyl, substituiertem (C₁-C₂₂)-Alkyl, (C₃-C₈)-Cycloalkyl und substituiertem (C₃-C₈)-Cycloalkyl ausgewählt ist;
R₁₀ und R₁₁ unabhängig aus Wasserstoff, (C₁-C₂₂)-Alkyl, substituiertem (C₁-C₂₂)-Alkyl, (C₃-C₈)-Cycloalkyl und substituiertem (C₃-C₈)-Cycloalkyl ausgewählt sind; R₁₀ und R₁₁ zusammen eine zweiwertige Gruppe darstellen können, die einen Ring mit dem Stickstoffatom bildet, an das sie gebunden sind;
L₁ eine zweiwertige Verknüpfungsgruppe ist, die aus (C₂-C₂₂)-Alkylen, -(CH₂CH₂-Y₁)₁₋₃-CH₂CH₂-, (C₃-C₈)-Cycloalkylen, Arylen und -CO-L₂-OC ausgewählt ist;
Y₂ aus -O- und -N(R₄)- ausgewählt ist;
Z eine positive ganze Zahl von bis zu 20 ist;
m1 aus 0 bis 10 ausgewählt ist;
n1 eine positive ganze Zahl ist, die aus 2 bis 12 ausgewählt ist;
R₁₂ und R₁₃ unabhängig aus Wasserstoff, (C₁-C₂₂)-Alkyl, substituiertem (C₁-C₂₂)-Alkyl, Heteroaryl, Aryl und einem Rest B ausgewählt sind, wobei der Rest B aus den folgenden Strukturen ausgewählt ist: 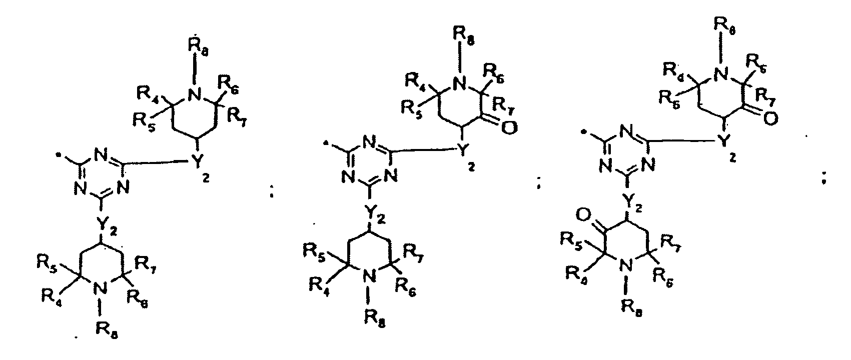 worin * die Position der Verknüpfung bezeichnet und worin mindestens eines von R₁₂ und R₁₃ ein Rest B ist; und
(D) mindestens einem Polycarbonat,
wobei die phosphorhaltige Verbindung ausgewählt ist aus den Formeln: 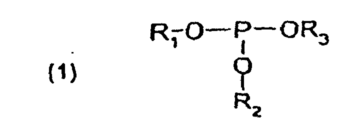 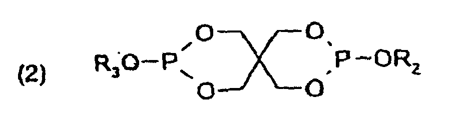 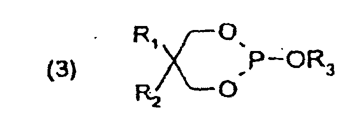 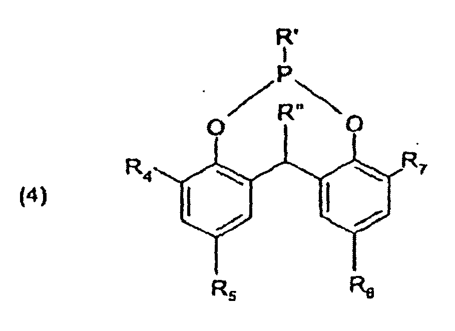 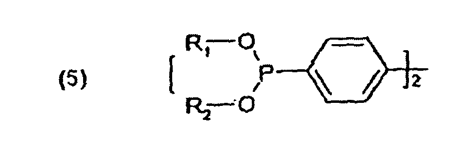 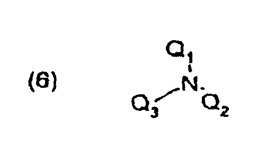 worin
R₁, R₂ und R₃ unabhängig aus (C₁-C₂₂)-Alkyl, substituiertem (C₁-C₂₂)-Alkyl, (C₃-C₈)-Cycloalkyl, substituiertem (C₃-C₈)-Cycloalkyl und Heteroaryl ausgewählt sind;
R' aus Halogen und OR₁ ausgewählt ist;
R", R₄, R₅, R₆ und R₇ unabhängig aus Wasserstoff, (C₁-C₂₂)-Alkyl, substituiertem (C₁-C₂₂)-Alkyl, (C₃-C₈)-Cycloalkyl, substituiertem (C₃-C₈)-Cycloalkyl, Heteroaryl und Aryl ausgewählt sind;
jede Gruppe Q₁, Q₂ und Q₃ unabhängig ein Rest A ist, wobei der Rest A die folgende Struktur aufweist:

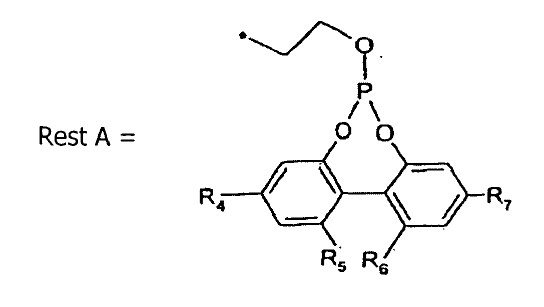

14. Polymerblend nach Anspruch 13, bei dem R₈ Wasserstoff oder Alkyl bei dem gehinderten Amin-Lichtstabilisator ist.

15. Polymerblend nach Anspruch 13, bei dem der mindestens eine gehinderte Amin-Lichtstabilisator ein sp³-hybridisiertes Stickstoffatom enthält, das nicht innerhalb des substituierten Piperidin-Rings enthalten ist.

16. Polymerblend nach Anspruch 13, bei dem der mindestens eine gehinderte Amin-Lichtstabilisator ein Gewichtsmittel des Molekulargewichts von mehr als 1000 aufweist.

17. Polymerblend nach Anspruch 13, bei dem die phosphorhaltige Verbindung ausgewählt ist aus der Gruppe bestehend aus Distearylpentaerythritdiphosphit und Bis(2,4-dicumylphenyl)pentaerythritdiphosphit.

18. Polymerblend nach Anspruch 17, bei dem die phosphorhaltige Verbindung Distearylpentaerythritdiphosphit ist.

19. Polymerblend nach Anspruch 17, umfassend etwa 0,15 bis 0,35 Gewichtsprozent der phosphorhaltigen Verbindungen und 0,1 bis 0,75 Gewichtsprozent des gehinderten Amin-Lichtstabilisators, bezogen auf das Gesamtgewicht des Polymerblends.

20. Polymerblend nach Anspruch 13, bei dem der Polyester der Komponente (A) eine innere Viskosität von 0,4 bis 0,8 dl/g aufweist, gemessen bei 25°C in einem 60/40-Gewichtsverhältnis von Phenol/Tetrachlorethan, und umfasst:
(1) Disäure-Reste, die 80 bis 100 Molprozent Terephthalsäure-Reste und 0 bis 20 Molprozent Isophthalsäure-Reste umfassen; und
(2) Diol-Reste, die 40 bis 100 Molprozent 1,4-Cyclohexandimethanol-Reste und 0 bis etwa 60 Molprozent Ethylenglycol-Reste umfassen.

21. Polymerblend nach Anspruch 13, bei dem der Polyester der Komponente (A) eine innere Viskosität von 0,4 bis 0,8 dl/g aufweist, gemessen bei 25°C in einem 60/40-Gewichtsverhältnis von Phenol/Tetrachlorethan, und umfasst:
(1) Disäure-Reste, die etwa 80 bis 100 Molprozent Terephthalsäure-Reste und 0 bis 20 Molprozent Isophthalsäure-Reste umfassen; und
(2) Diol-Reste, die 55 bis 80 Molprozent 1,4-Cyclohexandimethanol-Reste und 20 bis etwa 45 Molprozent Ethylenglycol-Reste umfassen.

22. Polymerblend nach Anspruch 13, bei dem der Polyester der Komponente (A) eine innere Viskosität von 0,4 bis 0,8 dl/g aufweist, gemessen bei 25°C in einem 60/40-Gewichtsverhältnis von Phenol/Tetrachlorethan, und umfasst:
(1) Disäure-Reste, die 65 bis 83 Molprozent Terephthalsäure-Reste und 35 bis 17 Molprozent Isophthalsäure-Reste umfassen; und
(2) Diol-Reste, die 80 bis 100 Molprozent 1,4-Cyclohexandimethanol-Reste und 0 bis 20 Molprozent Ethylenglycol-Reste umfassen.

23. Polymerblend nach Anspruch 22, bei dem der Polyester der Komponente (A) umfasst:
(1) Disäure-Reste, die 70 bis 80 Molprozent Terephthalsäure-Reste und 30 bis 20 Molprozent Isophthalsäure-Reste umfassen; und
(2) Diol-Reste, die 90 bis 100 Molprozent 1,4-Cyclohexandimethanol-Reste und 0 bis 10 Molprozent Ethylenglycol-Reste umfassen.

24. Polymerblend nach Anspruch 13, bei dem der Polyester der Komponente (A) eine innere Viskosität von 0,4 bis 1,2 dl/g aufweist, gemessen bei 25°C in einem 60/40-Gewichtsverhältnis von Phenol/Tetrachlorethan, und umfasst:
(1) Disäure-Reste, die mindestens 80 Molprozent 1,4-Cyclohexandicarbonsäure-Reste umfassen; und
(2) Diol-Reste, die mindestens 80 Molprozent 1,4-Cyclohexandimethanol-Reste umfassen.

25. Polymerblend nach Anspruch 24, bei dem der Polyester der Komponente (A) umfasst:
(1) Disäure-Reste, die 90 bis 100 Molprozent 1,4-Cyclohexandicarbonsäure-Reste umfassen;
(2) Diol-Reste, die 90 bis 100 Molprozent 1,4-Cyclohexandimethanol-Reste umfassen.

26. Polymerblend nach Anspruch 25, bei dem der Polyester der Komponente (A) umfasst:
(1) Disäure-Reste, die 100 Molprozent 1,4-Cyclohexandicarbonsäure-Reste umfassen;
(2) Diol-Reste, die 100 Molprozent 1,4-Cyclohexandimethanol-Reste umfassen.

27. Polymerblend, umfassend eine Mischung von:
(A) mindestens einem Polyester mit einer inneren Viskosität von 0,4 bis 1,2 dl/g, gemessen bei 25°C in einem 60/40-Gewichtsverhältnis von Phenol/Tetrachlorethan, der umfasst:
(1) Disäure-Reste, die mindestens 50 Molprozent an Terephthalsäure-Resten, Cyclohexandicarbonsäure-Resten oder einer Mischung derselben umfassen; und
(2) Diol-Reste, die mindestens 50 Molprozent an Ethylenglycol-, Cyclohexandimethanol-Resten oder einer Mischung derselben umfassen; wobei die Gesamt-Molprozentsätze an Disäure-Resten 100 Molprozent sind und die Gesamt-Molprozentsätze an Diol-Resten 100 Molprozent sind; und
(B) 0,1 bis 0,5 Gewichtsprozent mindestens einer phosphorhaltigen Verbindung, die ausgewählt ist aus der Gruppe von Bis(2,4-di-t-butylphenyl)pentaerythritdiphosphit, Distearylpentaerythritdiphosphit und Bis(2,4-dicumylphenyl)pentaerythritdiphosphit, bezogen auf das Gesamtgewicht des Blends;
(C) 0,1 bis 1,0 Gewichtsprozent mindestens eines gehinderten Amin-Lichtstabilisators, bezogen auf das Gesamtgewicht der Zusammensetzung, mit der Formel: 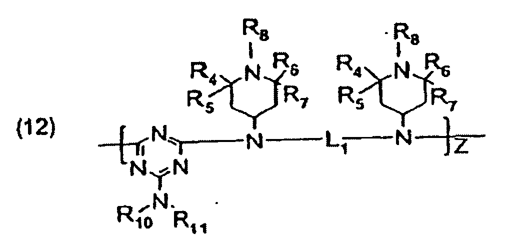 worin R₄ = R₅ = R₆ = R₇ = R₈ = Methyl, (R₁₀)(R₁₁)N- zusammen Morpholino darstellen, L₁ für (C₁ bis C₆)-Alkylen steht und Z für 1 bis 6 steht; und
(D) mindestens einem Polycarbonat.

28. Polymerblend nach Anspruch 27, umfassend 0,15 bis 0,35 Gewichtsprozent der phosphorhaltigen Verbindungen und 0,1 bis 0,75 Gewichtsprozent des gehinderten Amin-Lichtstabilisators, bezogen auf das Gesamtgewicht des Polymerblends.

29. Polymerblend nach Anspruch 27, bei dem der Polyester der Komponente (A) umfasst:
(1) Disäure-Reste, die 80 bis 100 Molprozent Terephthalsäure-Reste, 0 bis 20 Molprozent Isophthalsäure-Reste umfassen; und
(2) Diol-Reste, die 55 bis 80 Molprozent 1,4-Cyclohexandimethanol-Reste und 20 bis 45 Molprozent Ethylenglycol-Reste umfassen;
wobei die Summe der Disäure-Reste gleich 100 Molprozent ist und die Summe der Diol-Reste ebenfalls gleich 100 Molprozent ist.

30. Polymerblend nach Anspruch 27, bei dem der Polyester der Komponente (A) umfasst:
(1) Disäure-Reste, die 70 bis 80 Molprozent Terephthalsäure-Reste, 30 bis 20 Molprozent Isophthalsäure-Reste umfassen; und
(2) Diol-Reste, die 50 bis 100 Molprozent 1,4-Cyclohexandimethanol-Reste und 0 bis 10 Molprozent Ethylenglycol-Reste umfassen;
wobei die Summe der Disäure-Reste gleich 100 Molprozent ist und die Summe der Diol-Reste ebenfalls gleich 100 Molprozent ist.

31. Polymerblend nach Anspruch 27, bei dem der Polyester der Komponente (A) umfasst:
(1) Disäure-Reste, umfassend mindestens 90 Molprozent 1,4-Cyclohexandicarbonsäure-Reste; und
(2) Diol-Reste, die mindestens 90 Molprozent 1,4-Cyclohexandimethanol-Reste umfassen;
wobei die Summe der Disäure-Reste gleich 100 Molprozent ist und die Summe der Diol-Reste ebenfalls gleich 100 Molprozent ist.

32. Polymerblend nach Anspruch 27, bei dem die phosphorhaltige Verbindung Distearylpentaerythritdiphosphit ist.

33. Polymerblend nach Anspruch 1, bei dem das Polycarbonat von Bisphenol A abgeleitet ist.

34. Polymerblend nach Anspruch 4, bei dem das Polycarbonat von Bisphenol A abgeleitet ist.

35. Polymerblend nach Anspruch 13, bei dem das Polycarbonat von Bisphenol A abgeleitet ist.

36. Polymerblend nach Anspruch 27, bei dem das Polycarbonat von Bisphenol A abgeleitet ist.

37. Polymerblend nach Anspruch 1, bei dem die mindestens eine gehinderte Amin-Lichtstabilisatorverbindung 1,3,5-Triazin-2,4,6-triamin, N,N"'-[1,2-Ethandiylbis[[[4,6-bis[butyl(1,2,2,6,6-pentamethyl-4-piperdinyl)amino]-1,3,5-triazin-2-yl]imino]-3,1-propandiyl]]]-bis[N,N"-dibutyl-N,N"-bis(1,2,2,6,6-pentamethyl-4-piperdinyl)- ist.

38. Polymerblend nach irgendeinem der vorangehenden Ansprüche, erhältlich durch Zugabe der phosphorhaltigen Verbindung (B) und des gehinderten Amin-Lichtstabilisators (C) zu dem Blend über getrennte Konzentrate.

39. Verfahren zur Herstellung des Polymerblends nach irgendeinem der vorangehenden Ansprüche, wobei das Verfahren die Zugabe der phosphorhaltigen Verbindung (B) und des gehinderten Amin-Lichtstabilisators (C) zu dem Blend über getrennte Konzentrate umfasst.

## Revendications

1. Mélange de polymères comprenant un mélange de :
(A) au moins un polyester préparé par la réaction d'au moins un diol avec au moins un acide dicarboxylique ou un ester dialkylique de celui-ci en présence d'un catalyseur métallique ;
(B) au moins un composé contenant du phosphore ;
(C) au moins un stabilisant à la lumière de type amine encombrée ; et
(D) au moins un polycarbonate,
dans lequel le composé contenant du phosphore est choisi parmi les formules : 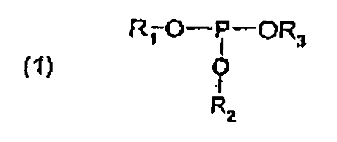 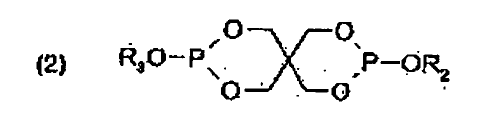 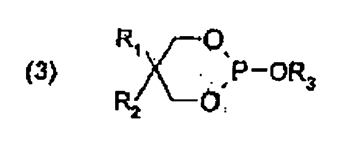 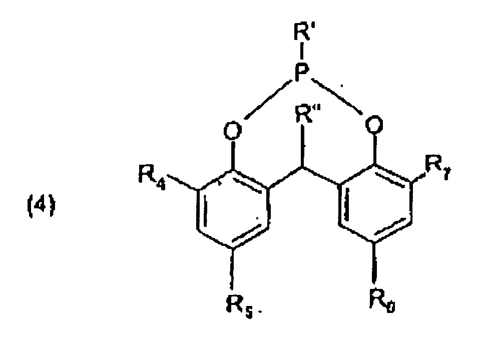 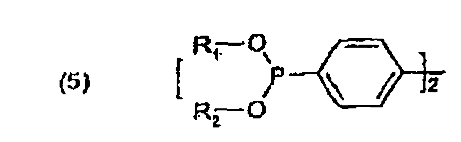 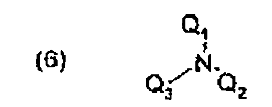 dans lesquelles
R₁, R₂ et R₃ sont choisis indépendamment parmi les groupes alkyle en C₁-C₂₂, alkyle en C₁-C₂₂ substitué, cycloalkyle en C₃-C₈, cycloalkyle en C₃-C₈ substitué et hétéroaryle ;
R' est choisi parmi un atome d'halogène et OR₁ ;
R", R₄, R₅, R₆ et R₇ sont choisis indépendamment parmi un atome d'hydrogène, les groupes alkyle en C₁-C₂₂, alkyle en C₁-C₂₂ substitué, cycloalkyle en C₃-C₈, cycloalkyle en C₃-C₈ substitué, hétéroaryle et aryle ;
chaque groupe Q₁, Q₂ et Q₃ est indépendamment un radical A, où le radical A a la structure suivante :

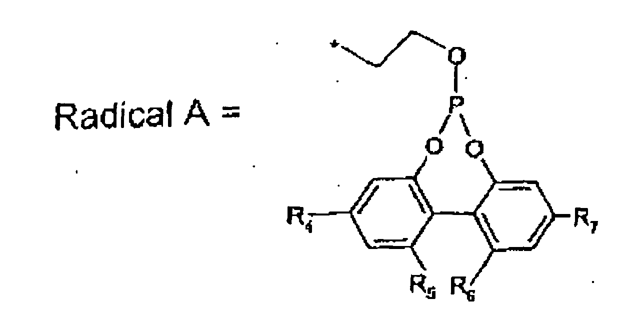

2. Mélange de polymères selon la revendication 1, dans lequel le au moins un polyester comprend :
(1) des résidus de diacide comprenant au moins 50 pour cent en moles de résidus d'acide téréphtalique, de résidus d'acide cyclohexanedicarboxylique ou d'un mélange de ceux-ci ; et
(2) des résidus de diol comprenant au moins 50 pour cent en moles de résidus d'éthylène glycol, de résidus de cyclohexanediméthanol ou d'un mélange de ceux-ci ;
où le total des résidus de diacide est égal à 100 pour cent en moles et le total des résidus de diol est aussi égal à 100 pour cent en moles.

3. Mélange de polymères selon la revendication 2, dans lequel le polyester comprend jusqu'à 200 ppm en poids de résidus de Ti, de Co et/ou de Mn.

4. Mélange de polymères comprenant :
(A) au moins un polyester comprenant :
(1) des résidus de diacide comprenant au moins 50 pour cent en moles de résidu d'un diacide choisi parmi l'acide 1,4-cyclohexanedicarboxylique, l'acide téréphtalique et l'acide isophtalique ou un mélange de ceux-ci ; et
(2) des résidus de diol comprenant au moins 50 pour cent en moles de résidus d'éthylène glycol, de résidus de cyclohexanediméthanol ou d'un mélange de ceux-ci ;
par rapport au total de 100 pour cent en moles des résidus de diacide et au total de 100 pour cent en moles des résidus de diol ;
(B) 0,01 à 0,5 pour cent en poids d'au moins un composé contenant du phosphore par rapport au poids total du mélange ;
(C) 0,01 à 1,0 pour cent en poids d'au moins un stabilisant à la lumière de type amine encombrée par rapport au poids total du mélange, où le au moins un stabilisant à la lumière de type amine encombrée est choisi parmi les formules suivantes : 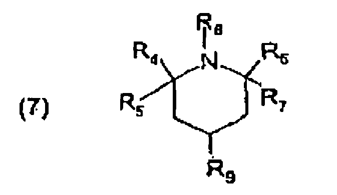 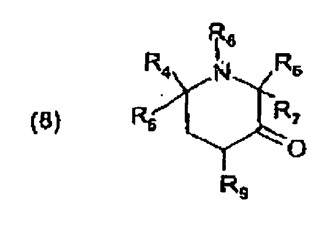 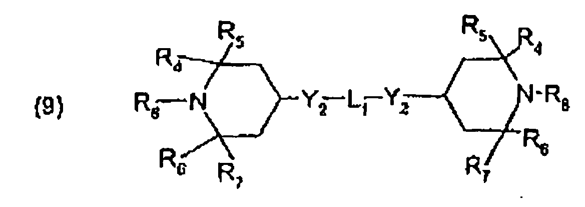 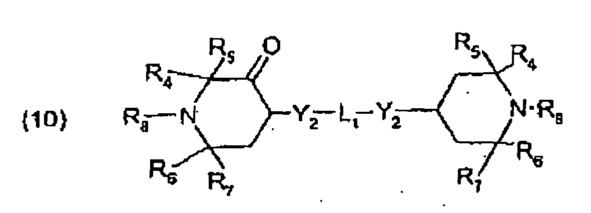 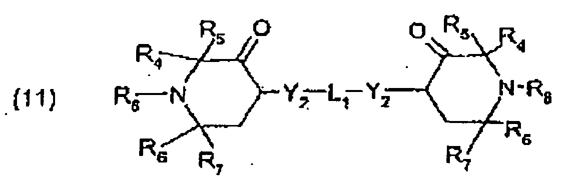 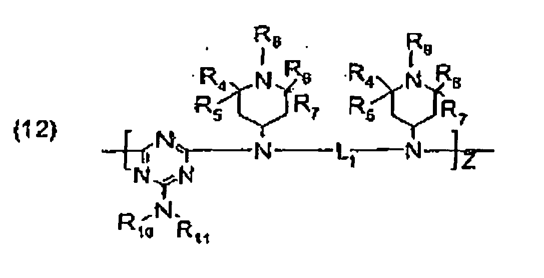 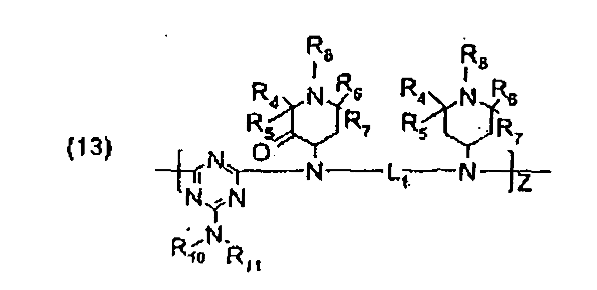 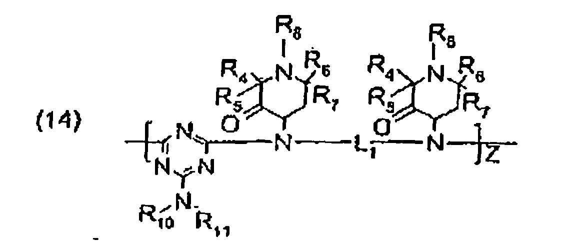 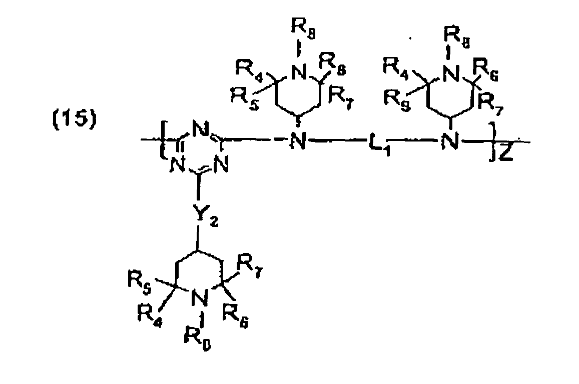 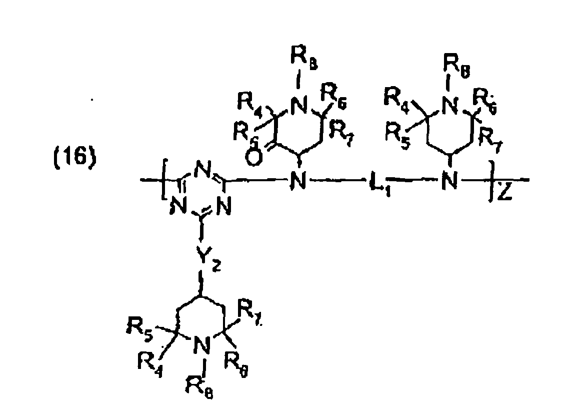 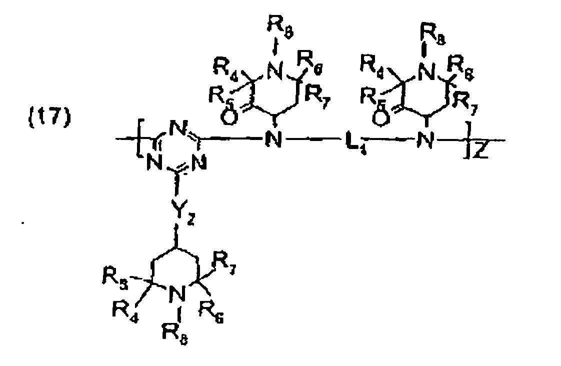 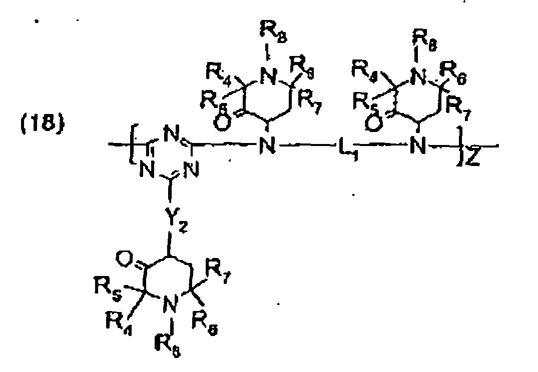 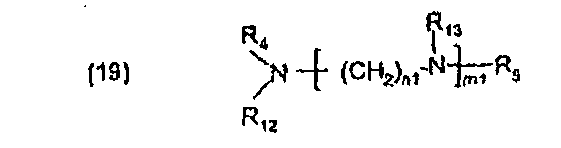 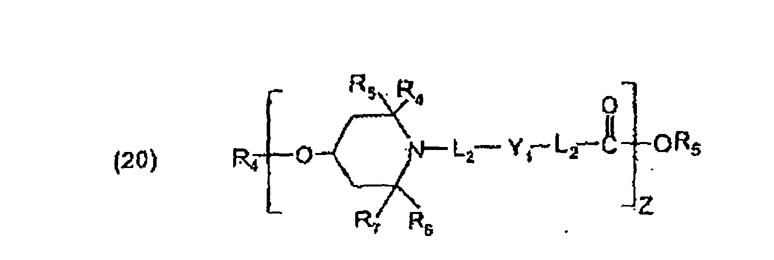 dans lesquelles
R₄, R₅, R₆ et R₇ sont choisis indépendamment parmi un atome d'hydrogène, les groupes alkyle en C₁-C₂₂, alkyle en C₁-C₂₂ substitué, cycloalkyle en C₃-C₈, cycloalkyle en C₃-C₈ substitué, hétéroaryle et aryle ;
R₈ est choisi parmi un atome d'hydrogène, les groupes -OR₆, alkyle en C₁-C₂₂, alkyle en C₁-C₂₂ substitué, cycloalkyle en C₃-C₈ et cycloalkyle en C₃-C₈ substitué ;
R₉ est choisi parmi un atome d'hydrogène, les groupes alkyle en C₁-C₂₂, alkyle en C₁-C₂₂ substitué, cycloalkyle en C₃-C₈, cycloalkyle en C₃-C₈ substitué, hétéroaryle, aryle, -Y₁-R₄, et un groupe succinimido répondant à la formule : 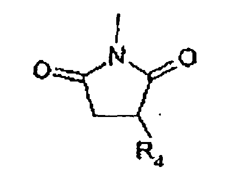 R₁₀ et R₁₁ sont choisis indépendamment parmi un atome d'hydrogène, les groupes alkyle en C₁-C₂₂, alkyle en C₁-C₂₂ substitué, cycloalkyle en C₃-C₈ et cycloalkyle en C₃-C₈ substitué ; R₁₀ et R₁₁ peuvent conjointement représenter un groupe divalent formant un cycle avec l'atome d'azote auquel ils sont attachés ;
L₁ est un groupe de liaison divalent choisi parmi les groupes alkylène en C₂-C₂₂, -(CH₂CH₂-Y₁)₁₋₃-CH₂CH₂-, cycloalkylène en C₃-C₈, arylène et -CO-L₂-OC- ;
L₂ est choisi parmi les groupes alkylène en C₁-C₂₂, arylène, -(CH₂CH₂-Y₁)₁₋₃-CH₂CH₂- et cycloalkylène en C₃-C₈ ;
Y₁ est choisi parmi -OC(O)-, -NHC(O)-, -O-, -S- et -N(R₄)-
Y₂ est choisi parmi -O- et -N(R₄)- ;
Z est un nombre entier positif valant jusqu'à 20 ;
m1 est choisi parmi 0 à 10 ;
n1 est un nombre entier positif choisi parmi 2 à 12 ;
R₁₂ et R₁₃ sont choisis indépendamment parmi un atome d'hydrogène, les groupes alkyle en C₁-C₂₂, alkyle en C₁-C₂₂ substitué, hétéroaryle, aryle et un radical B, où le radical B est choisi parmi les structures suivantes : 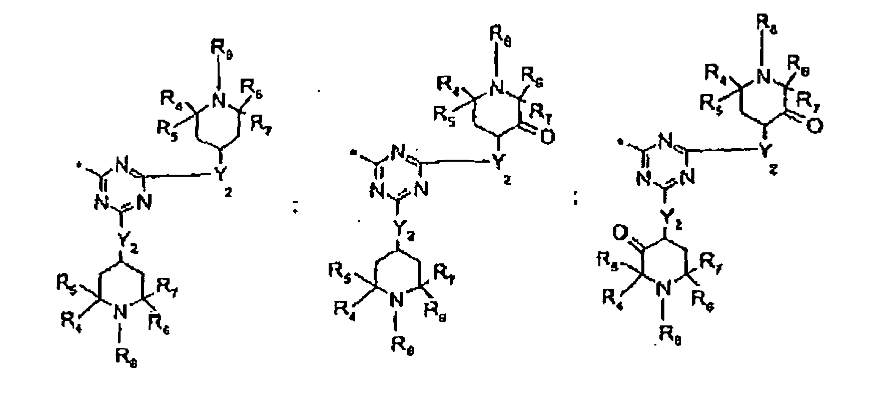 dans lesquelles * désigne la position de fixation et dans lesquelles l'un au moins de R₁₂ et R₁₃ est un radical B ; et
(D) au moins un polycarbonate,
dans lequel le composé contenant du phosphore est choisi parmi les formules : 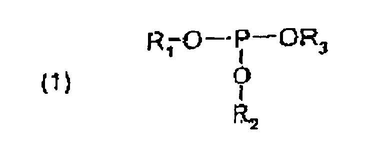 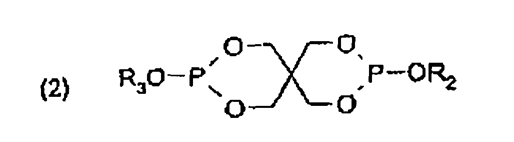 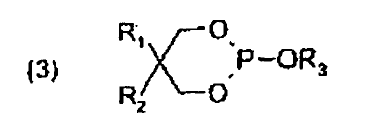 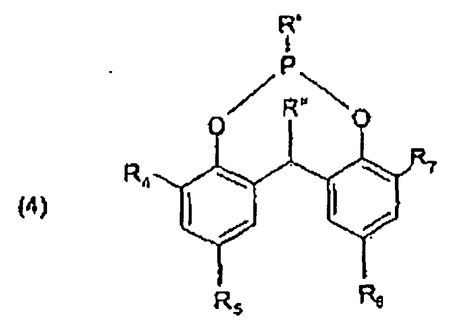 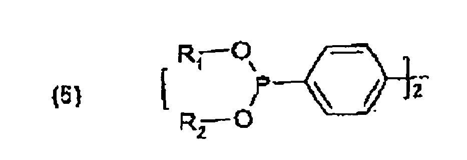 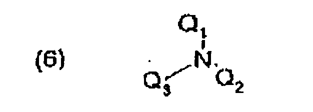 dans lesquelles
R₁, R₂ et R₃ sont choisis indépendamment parmi les groupes alkyle en C₁-C₂₂, alkyle en C₁-C₂₂ substitué, cycloalkyle en C₃-C₈, cycloalkyle en C₃-C₈ substitué et hétéroaryle ;
R' est choisi parmi un atome d'halogène et OR₁ ;
R", R₄, R₅, R₆ et R₇ sont choisis indépendamment parmi un atome d'hydrogène, les groupes alkyle en C₁-C₂₂, alkyle en C₁-C₂₂ substitué, cycloalkyle en C₃-C₈, cycloalkyle en C₃-C₈ substitué, hétéroaryle et aryle ;
chaque groupe Q₁, Q₂ et Q₃ est indépendamment un radical A, où le radical A a la structure suivante :

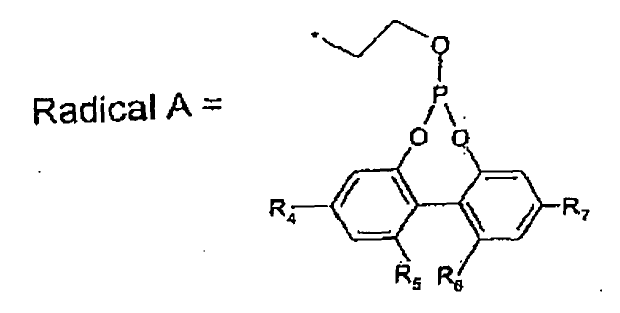

5. Mélange de polymères selon la revendication 4, dans lequel R₈ est un atome d'hydrogène ou un groupe alkyle.

6. Mélange de polymères selon la revendication 5, dans lequel le polyester du composant (A) a une viscosité inhérente de 0,4 à 1,2 dl/g mesurée à 25 °C dans un mélange ayant un rapport en poids de 60/40 de phénol/tétrachloroéthane et comprend :
(1) des résidus de diacide comprenant 80 à 100 pour cent en moles de résidus d'acide téréphtalique et 0 à 20 pour cent en moles de résidus d'acide isophtalique ; et
(2) des résidus de diol comprenant de 40 à 100 pour cent en moles de résidus de 1,4-cyclohexanediméthanol et 0 à 60 pour cent en moles de résidus d'éthylène glycol et le composant (B) comprend de 0,05 à 0,5 pour cent en poids d'au moins un composé contenant du phosphore et le composant (C) comprend de 0,05 à 1,0 pour cent en poids d'au moins un stabilisant à la lumière de type amine encombrée, par rapport au poids total de la composition.

7. Mélange de polymères selon la revendication 6, dans lequel le polyester du composant (A) a une viscosité inhérente de 0,4 à 0,8 dl/g mesurée à 25 °C dans un mélange ayant un rapport en poids de 60/40 de phénol/tétrachloroéthane et comprend :
(1) des résidus de diacide comprenant 80 à 100 pour cent en moles de résidus d'acide téréphtalique et 0 à 20 pour cent en moles de résidus d'acide isophtalique ; et
(2) des résidus de diol comprenant de 55 à 80 pour cent en moles de résidus de 1,4-cyclohexanediméthanol et 20 à 45 pour cent en moles de résidus d'éthylène glycol.

8. Mélange de polymères selon la revendication 4, dans lequel le polyester du composant (A) a une viscosité inhérente de 0,4 à 0,8 dl/g mesurée à 25 °C dans un mélange ayant un rapport en poids de 60/40 de phénol/tétrachloroéthane et comprend :
(1) des résidus de diacide comprenant 65 à 83 pour cent en moles de résidus d'acide téréphtalique et 35 à 17 pour cent en moles de résidus d'acide isophtalique ; et
(2) des résidus de diol comprenant de 80 à 100 pour cent en moles de résidus de 1,4-cyclohexanediméthanol et 0 à 20 pour cent en moles de résidus d'éthylène glycol.

9. Mélange de polymères selon la revendication 8, dans lequel le polyester du composant (A) comprend :
(1) des résidus de diacide comprenant 70 à 80 pour cent en moles de résidus d'acide téréphtalique et 30 à 20 pour cent en moles de résidus d'acide isophtalique ; et
(2) des résidus de diol comprenant de 90 à 100 pour cent en moles de résidus de 1,4-cyclohexanediméthanol et 0 à 10 pour cent en moles de résidus d'éthylène glycol.

10. Mélange de polymères selon la revendication 4, dans lequel le polyester du composant (A) a une viscosité inhérente de 0,4 à 1,2 dl/g mesurée à 25 °C dans un mélange ayant un rapport en poids de 60/40 de phénol/tétrachloroéthane et comprend :
(1) des résidus de diacide comprenant au moins 80 pour cent en moles de résidus d'acide 1,4-cyclohexanedicarboxylique ; et
(2) des résidus de diol comprenant au moins 80 pour cent en moles de résidus de 1,4-cyclohexanediméthanol.

11. Mélange de polymères selon la revendication 10, dans lequel le polyester du composant (A) comprend :
(1) des résidus de diacide comprenant 90 à 100 pour cent en moles de résidus d'acide 1,4-cyclohexanedicarboxylique ; et
(2) des résidus de diol comprenant 90 à 100 pour cent en moles de résidus de 1, 4-cyclohexanediméthanol.

12. Mélange de polymères selon la revendication 11, dans lequel le polyester du composant (A) comprend :
(1) des résidus de diacide comprenant 100 pour cent en moles de résidus d'acide 1,4-cyclohexanedicarboxylique ; et
(2) des résidus de diol comprenant 100 pour cent en moles de résidus de 1,4-cyclohexanediméthanol.

13. Mélange de polymères comprenant un mélange des composés suivants :
(A) au moins un polyester ayant une viscosité inhérente de 0,4 à 1,2 dl/g mesurée à 25 °C dans un mélange ayant un rapport en poids de 60/40 de phénol/tétrachloroéthane et comprenant :
(1) des résidus de diacide comprenant au moins 50 pour cent en moles de résidu d'un diacide choisi parmi l'acide 1,4-cyclohexanedicarboxylique, l'acide téréphtalique et l'acide isophtalique ou un mélange de ceux-ci ; et
(2) des résidus de diol comprenant au moins 50 pour cent en moles de résidus d'éthylène glycol, de résidus de cyclohexanediméthanol ou d'un mélange de ceux-ci ;
(B) 0,01 à 0,5 pour cent en poids d'au moins un composé contenant du phosphore par rapport au poids total de la composition ;
(C) 0,1 à 1,0 pour cent en poids d'au moins un stabilisant à la lumière de type amine encombrée par rapport au poids total de la composition, répondant aux formules : 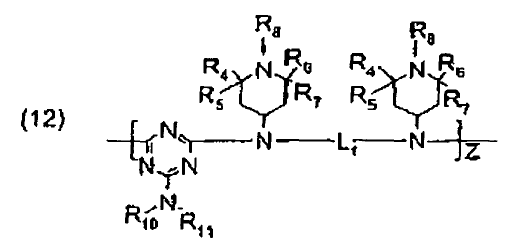 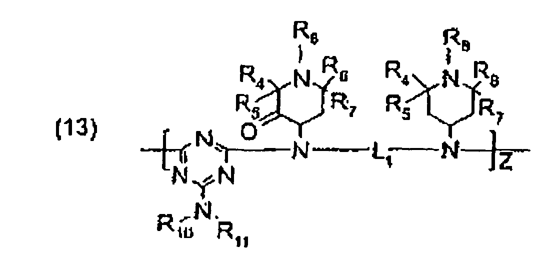 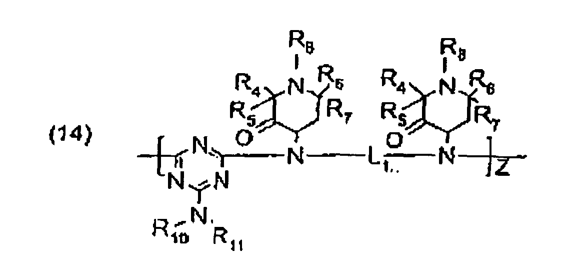 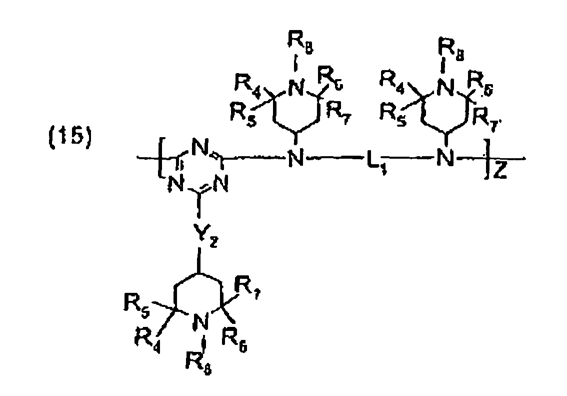 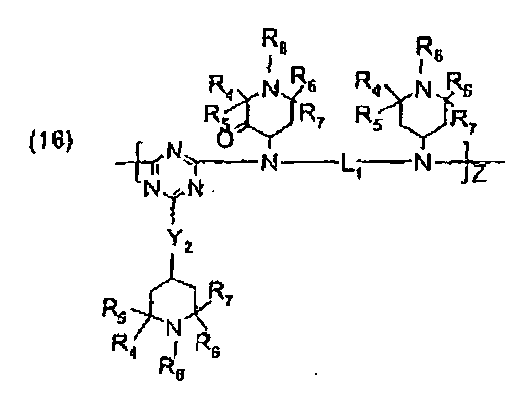 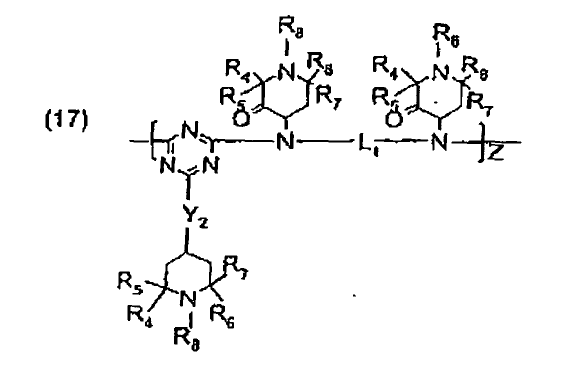 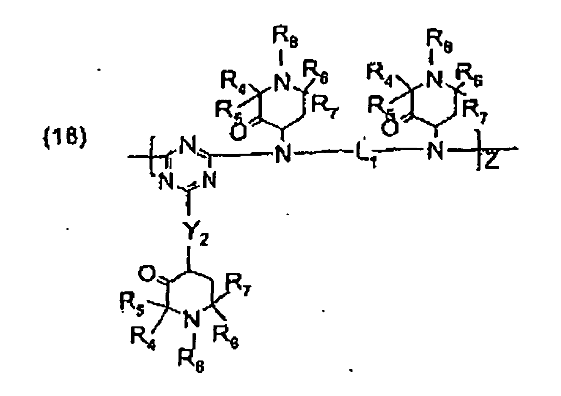 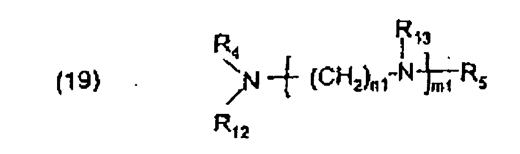 dans lesquelles
R₄, R₅, R₆ et R₇ sont choisis indépendamment parmi un atome d'hydrogène, les groupes alkyle en C₁-C₂₂, alkyle en C₁-C₂₂ substitué, cycloalkyle en C₃-C₈, cycloalkyle en C₃-C₈ substitué, hétéroaryle et aryle ;
R₈ est choisi parmi un atome d'hydrogène, les groupes -OR₆, alkyle en C₁-C₂₂, alkyle en C₁-C₂₂ substitué, cycloalkyle en C₃-C₈ et cycloalkyle en C₃-C₈ substitué ;
R₁₀ et R₁₁ sont choisis indépendamment parmi un atome d'hydrogène, les groupes alkyle en C₁-C₂₂, alkyle en C₁-C₂₂ substitué, cycloalkyle en C₃-C₈ et cycloalkyle en C₃-C₈ substitué; R₁₀ et R₁₁ peuvent conjointement représenter un groupe divalent formant un cycle avec l'atome d'azote auquel ils sont attachés ;
L₁ est un groupe de liaison divalent choisi parmi les groupes alkylène en C₂-C₂₂, -(CH₂CH₂-Y₁)₁₋₃-CH₂CH₂-, cycloalkylène en C₃-C₈, arylène et -CO-L₂-OC- ;
Y₂ est choisi parmi -O- et -N(R₄)- ;
Z est un nombre entier positif valant jusqu'à 20 ;
m1 est choisi parmi 0 à 10 ;
n1 est un nombre entier positif choisi parmi 2 à 12 ;
R₁₂ et R₁₃ sont choisis indépendamment parmi un atome d'hydrogène, les groupes alkyle en C₁-C₂₂, alkyle en C₁-C₂₂ substitué, hétéroaryle, aryle et un radical B, où le radical B est choisi parmi les structures suivantes : 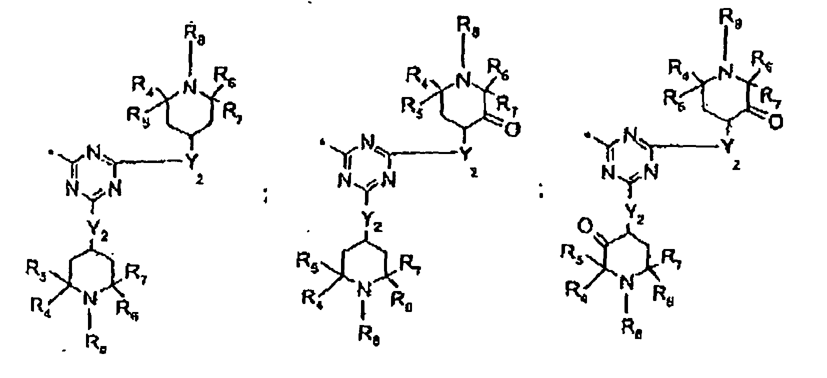 dans lesquelles * désigne la position de fixation et dans lesquelles l'un au moins de R₁₂ et R₁₃ est un radical B ; et
(D) au moins un polycarbonate,
dans lequel le composé contenant du phosphore est choisi parmi les formules : 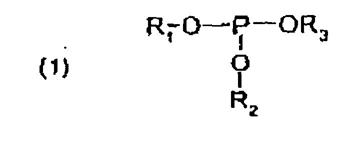 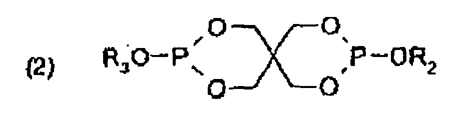 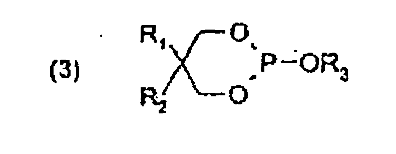 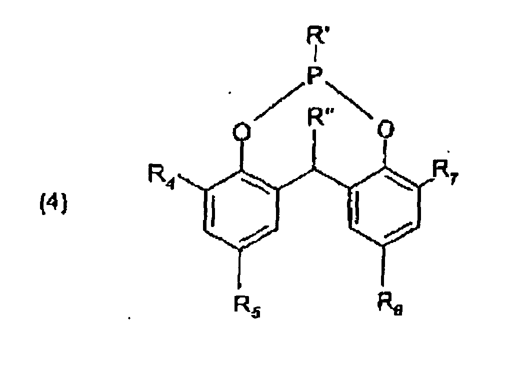 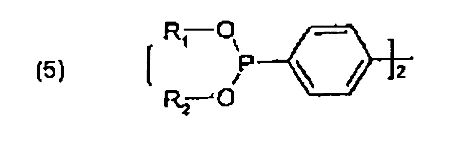 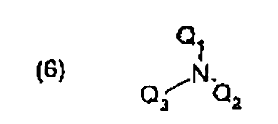 dans lesquelles
R₁, R₂ et R₃ sont choisis indépendamment parmi les groupes alkyle en C₁-C₂₂, alkyle en C₁-C₂₂ substitué, cycloalkyle en C₃-C₈, cycloalkyle en C₃-C₈ substitué et hétéroaryle ;
R' est choisi parmi un atome d'halogène et OR₁ ;
R", R₄, R₅, R₆ et R₇ sont choisis indépendamment parmi un atome d'hydrogène, les groupes alkyle en C₁-C₂₂, alkyle en C₁-C₂₂ substitué, cycloalkyle en C₃-C₈, cycloalkyle en C₃-C₈ substitué, hétéroaryle et aryle ;
chaque groupe Q₁, Q₂ et Q₃ est indépendamment un radical A, où le radical A a la structure suivante :

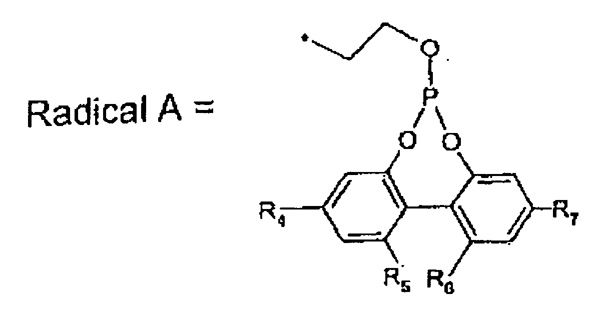

14. Mélange de polymères selon la revendication 13, dans lequel R₈ est un atome d'hydrogène ou un groupe alkyle pour le stabilisant à la lumière de type amine encombrée.

15. Mélange de polymères selon la revendication 13, dans lequel le au moins un stabilisant à la lumière de type amine encombrée contient un atome d'azote sp³ hybridé qui n'est pas contenu dans le cycle pipéridine substitué.

16. Mélange de polymères selon la revendication 13, dans lequel le au moins un stabilisant à la lumière de type amine encombrée a une masse moléculaire moyenne en poids supérieure à 1 000.

17. Mélange de polymères selon la revendication 13, dans lequel le composé contenant du phosphore est choisi dans le groupe constitué par le diphosphite de distéarylpentaérythritol et le diphosphite de bis-(2,4-dicumylphényl)pentaérythritol.

18. Mélange de polymères selon la revendication 17, dans lequel ledit composé contenant du phosphore est le diphosphite de distéarylpentaérythritol.

19. Mélange de polymères selon la revendication 17, comprenant d'environ 0,15 à 0,35 pour cent en poids des composés contenant du phosphore et de 0,1 à 0,75 pour cent en poids du stabilisant à la lumière de type amine encombrée, par rapport au poids total du mélange de polymères.

20. Mélange de polymères selon la revendication 13, dans lequel le polyester du composant (A) a une viscosité inhérente de 0,4 à 0,8 dl/g mesurée à 25 °C dans un mélange ayant un rapport en poids de 60/40 de phénol/tétrachloroéthane et comprend :
(1) des résidus de diacide comprenant 80 à 100 pour cent en moles de résidus d'acide téréphtalique et 0 à 20 pour cent en moles de résidus d'acide isophtalique ; et
(2) des résidus de diol comprenant de 40 à 100 pour cent en moles de résidus de 1,4-cyclohexanediméthanol et 0 à 60 pour cent en moles de résidus d'éthylène glycol.

21. Mélange de polymères selon la revendication 13, dans lequel le polyester du composant (A) a une viscosité inhérente de 0,4 à 0,8 dl/g mesurée à 25 °C dans un mélange ayant un rapport en poids de 60/40 de phénol/tétrachloroéthane et comprend :
(1) des résidus de diacide comprenant 80 à 100 pour cent en moles de résidus d'acide téréphtalique et 0 à 20 pour cent en moles de résidus d'acide isophtalique ; et
(2) des résidus de diol comprenant de 55 à 80 pour cent en moles de résidus de 1,4-cyclohexanediméthanol et 20 à 45 pour cent en moles de résidus d'éthylène glycol.

22. Mélange de polymères selon la revendication 13, dans lequel le polyester du composant (A) a une viscosité inhérente de 0,4 à 0,8 dl/g mesurée à 25 °C dans un mélange ayant un rapport en poids de 60/40 de phénol/tétrachloroéthane et comprend :
(1) des résidus de diacide comprenant 65 à 83 pour cent en moles de résidus d'acide téréphtalique et 35 à 17 pour cent en moles de résidus d'acide isophtalique ; et
(2) des résidus de diol comprenant de 80 à 100 pour cent en moles de résidus de 1,4-cyclohexanediméthanol et 0 à 20 pour cent en moles de résidus d'éthylène glycol.

23. Mélange de polymères selon la revendication 22, dans lequel le polyester du composant (A) comprend :
(1) des résidus de diacide comprenant 70 à 80 pour cent en moles de résidus d'acide téréphtalique et 30 à 20 pour cent en moles de résidus d'acide isophtalique ; et
(2) des résidus de diol comprenant de 90 à 100 pour cent en moles de résidus de 1,4-cyclohexanediméthanol et 0 à 10 pour cent en moles de résidus d'éthylène glycol.

24. Mélange de polymères selon la revendication 13, dans lequel le polyester du composant (A) a une viscosité inhérente de 0,4 à 1,2 dl/g mesurée à 25 °C dans un mélange ayant un rapport en poids de 60/40 de phénol/tétrachloroéthane et comprend :
(1) des résidus de diacide comprenant au moins 80 pour cent en moles de résidus d'acide 1,4-cyclohexanedicarboxylique ; et
(2) des résidus de diol comprenant au moins 80 pour cent en moles de résidus de 1,4-cyclohexanediméthanol.

25. Mélange de polymères selon la revendication 24, dans lequel le polyester du composant (A) comprend :
(1) des résidus de diacide comprenant 90 à 100 pour cent en moles de résidus d'acide 1,4-cyclohexanedicarboxylique ; et
(2) des résidus de diol comprenant 90 à 100 pour cent en moles de résidus de 1,4-cyclohexanediméthanol.

26. Mélange de polymères selon la revendication 25, dans lequel le polyester du composant (A) comprend :
(1) des résidus de diacide comprenant 100 pour cent en moles de résidus d'acide 1,4-cyclohexanedicarboxylique ; et
(2) des résidus de diol comprenant 100 pour cent en moles de résidus de 1,4-cyclohexanediméthanol.

27. Mélange de polymères comprenant un mélange de :
(A) au moins un polyester ayant une viscosité inhérente de 0,4 à 1,2 dl/g mesurée à 25 °C dans un mélange ayant un rapport en poids de 60/40 de phénol/tétrachloroéthane et comprenant :
(1) des résidus de diacide comprenant au moins 50 pour cent en moles de résidus d'acide téréphtalique, de résidus d'acide cyclohexanedicarboxylique ou d'un mélange de ceux-ci ; et
(2) des résidus de diol comprenant au moins 50 pour cent en moles d'éthylène glycol, de résidus de cyclohexanediméthanol ou d'un mélange de ceux-ci ; où les pourcentages totaux en moles des résidus de diacide sont de 100 pour cent en moles et les pourcentages totaux en moles des résidus de diol sont de 100 pour cent en moles ; et
(B) 0,1 à 0,5 pour cent en poids d'au moins un composé contenant du phosphore choisi dans le groupe constitué par le diphosphite de bis-(2,4-di-t-butylphényl) pentaérythritol, le diphosphite de distéarylpentaérythritol et le diphosphite de bis-(2,4-dicumylphényl)pentaérythritol, par rapport au poids total du mélange ;
(C) 0,1 à 1,0 pour cent en poids d'au moins un stabilisant à la lumière de type amine encombrée par rapport au poids total de la composition, répondant à la formule : 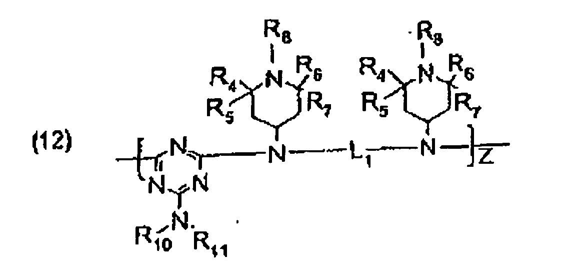 dans laquelle R₄= R₅= R₆= R₇= R₈=méthyle, (R₁₀)(R₁₁)N- représente collectivement un groupe morpholino, L₁ est un groupe alkylène en C₁-C₆ et Z vaut 1 à 6 ; et
(D) au moins un polycarbonate.

28. Mélange de polymères selon la revendication 27, comprenant de 0,15 à 0,35 % en poids des composés contenant du phosphore et de 0,1 à 0,75 pour cent en poids du stabilisant à la lumière de type amine encombrée, par rapport au poids total du mélange de polymères.

29. Mélange de polymères selon la revendication 27, dans lequel le polyester du composant (A) comprend :
(1) des résidus de diacide comprenant 80 à 100 pour cent en moles de résidus d'acide téréphtalique et 0 à 20 pour cent en moles de résidus d'acide isophtalique ; et
(2) des résidus de diol comprenant de 55 à 80 pour cent en moles de résidus de 1,4-cyclohexanediméthanol et 20 à 45 pour cent en moles de résidus d'éthylène glycol ;
où le total des résidus de diacide est égal à 100 pour cent en moles et le total des résidus de diol est aussi égal à 100 pour cent en moles.

30. Mélange de polymères selon la revendication 27, dans lequel le polyester du composant (A) comprend :
(1) des résidus de diacide comprenant 70 à 80 pour cent en moles de résidus d'acide téréphtalique et 30 à 20 pour cent en moles de résidus d'acide isophtalique ; et
(2) des résidus de diol comprenant de 90 à 100 pour cent en moles de résidus de 1,4-cyclohexanediméthanol et 0 à 10 pour cent en moles de résidus d'éthylène glycol ;
où le total des résidus de diacide est égal à 100 pour cent en moles et le total des résidus de diol est aussi égal à 100 pour cent en moles.

31. Mélange de polymères selon la revendication 27, dans lequel le polyester du composant (A) comprend :
(1) des résidus de diacide comprenant au moins 90 pour cent en moles de résidus d'acide 1,4-cyclohexane-dicarboxylique ; et
(2) des résidus de diol comprenant au moins 90 pour cent en moles de résidus de 1,4-cyclohexanediméthanol ;
où le total des résidus de diacide est égal à 100 pour cent en moles et le total des résidus de diol est aussi égal à 100 pour cent en moles.

32. Mélange de polymères selon la revendication 27, dans lequel ledit composé contenant du phosphore est le diphosphite de distéarylpentaérythritol.

33. Mélange de polymères selon la revendication 1, dans lequel le polycarbonate est dérivé du bisphénol A.

34. Mélange de polymères selon la revendication 4, dans lequel le polycarbonate est dérivé du bisphénol A.

35. Mélange de polymères selon la revendication 13, dans lequel le polycarbonate est dérivé du bisphénol A.

36. Mélange de polymères selon la revendication 27, dans lequel le polycarbonate est dérivé du bisphénol A.

37. Mélange de polymères selon la revendication 1, dans lequel le au moins un composé stabilisant à la lumière de type amine encombrée est la N,N"'-[1,2-éthanediyl-bis[[[4,6-bis[butyl(1,2,2,6,6-pentaméthyl-4-pipéridinyl)amino]-1,3,5-triazine-2-yl]imino]-3,1-propanediyl]]]-bis[N,N"-dibutyl-N,N"-bis(1,2,2,6,6-pentaméthyl-4-pipéridinyl)-1,3,5-triazine-2,4,6-triamine.

38. Mélange de polymères selon l'une quelconque des revendications précédentes, susceptible d'être obtenu par addition du composé contenant du phosphore (B) et du stabilisant à la lumière de type amine encombrée (C) au mélange par l'intermédiaire de concentrés séparés.

39. Procédé de préparation du mélange de polymères selon l'une quelconque des revendications précédentes, ledit procédé comprenant l'addition du composé contenant du phosphore (B) et du stabilisant à la lumière de type amine encombrée (C) au mélange par l'intermédiaire de concentrés séparés.
